# EUROPÄISCHE PATENTSCHRIFT

(11) **EP 3 880 404 B1**
(45) Veröffentlichungstag und Bekanntmachung des Hinweises auf die Patenterteilung: **04.05.2022**
(21) Anmeldenummer: 20797438.7
(22) Anmeldetag: 22.10.2020
(51) Int. Cl.: B24B 23/00

(54) **FÜHRUNGSVORRICHTUNG, SYSTEM UND VERFAHREN ZUR OBERFLÄCHENBEARBEITUNG**
GUIDE DEVICE, SYSTEM AND METHOD FOR SURFACE PROCESSING
DISPOSITIF, SYSTÈME ET PROCÉDÉ DE GUIDAGE POUR TRAITEMENT DE SURFACE

(30) Priorität: 23.12.2019 DE 102019135777
(43) Veröffentlichungstag der Anmeldung: 22.09.2021
(73) Patentinhaber: Festool GmbH, 73240 Wendlingen (DE)
(72) Erfinder: KNECHT, Nicolai, 72124 Pliezhausen (DE); BAYER, Timo, 72074 Tübingen (DE); OEHLER, Philipp, 79189 Bad Krozingen (DE); SCHÜSSLER, Erik, 71229 Leonberg (DE); GRIMM, David, 72622 Nürtingen (DE); BÄUERLE, Manuel, 70794 Filderstadt (DE); HIGELIN, Michael, 73257 Köngen (DE)
(74) Vertreter: Murgitroyd & Company
(86) Internationale Anmeldenummer: PCT/EP2020/079834
(87) Internationale Veröffentlichungsnummer: WO 2021/129967

(56) Entgegenhaltungen:
- WO-A2-2006/053138
- DE-U1- 7 905 963

## Beschreibung

### Technologischer Hintergrund

Die Erfindung betrifft eine Führungsvorrichtung, ein System umfassend eine Führungsvorrichtung und ein Werkzeug zur Oberflächenbearbeitung, ein Verfahren zur Oberflächenbearbeitung mit der Führungsvorrichtung und ein Verfahren zur Nachrüstung eines Werkzeuges mit der Führungsvorrichtung.

### Aufgaben der Erfindung

Für die Oberflächenbearbeitung sind der Einsatz von automatischen Maschinen Stand der Technik. Bei der Oberflächenbearbeitung sind beispielsweise Schleifelektrowerkzeuge wie der Bandschleifer oder Exzenterschleifer verbreitet. WO 2006/053138 A2, welche die Basis für den Oberbegriff des Anspruchs 1 bildet, beschreibt ein Anfaswerkzeug für Marmor, Granit und Ähnliches, das auf eine Schleifmaschine montierbar ist. DE 7905963 U1 betrifft ein bekanntes Kantenfräsgerät mit Handführung zum Anfasen. DE 10 2004 040 900 A1 betrifft eine weitere bekannte Handschleifvorrichtung.

Bei Oberflächenbearbeitung von Kanten mit handgeführten Exzenterschleifer oder ähnlichen Maschinen besteht allerdings das Problem, das das Schleifwerkzeug leicht abkippt und dadurch unerwünschte Schleifschäden wie einen Durchschliff erzeugen kann. In solchen Fällen wird häufig auf das altbewährte Handschleifen zurückgegriffen. Andererseits können zum Vermeiden des Verkantens eines Elektrowerkzeuges wie z.B. eines Schleifers Werkzeugstützelemente wie in der DE 20 2018 000 381 U1 verwendet werden. DE 3447379 betrifft eine bekannte Vorrichtung zum Führen einer handgeführten Winkelschleifmaschine mit einer Schiene mit längs verlaufenden Hohlwinkelprofil zur Aufnahme der zu bearbeitenden Kante.

Eine manuelle Bearbeitung mit einem Schleifblock ist zum Beispiel bei komplexen Bearbeitungsprozessen wie den Lackzwischenschliff von Kanten von Vorteil. Der Lackzwischenschliff ist der Schliff, der nach dem ersten Lackieren durchgeführt wird. Hierdurch soll eine geglättete Oberfläche entstehen. Durch ein möglichst gleichmäßiges Schleifbild und geringe Schleiftoleranz sollen zudem die Lackauftragsmengen verringert werden und der Poliervorgang verkürzt werden. Die Oberfläche darf dabei nicht beschädigt werden. Eine manuelle Bearbeitung für den Lackzwischenschliff ist als kostengünstige Alternative im Vergleich zu einer Bearbeitung an stationären Maschinen bekannt. Allerdings hat die händische Oberflächenbearbeitung mit dem Handschleifklotz den Nachteil, dass sie mit einem hohen Zeitaufwand verbunden ist und unregelmäßigere bzw. nicht reproduzierbare Schleifbilder als mit einer automatischen Schleifmaschine erzeugt.

Eine schnelle und genaue Bearbeitung von Kanten ist in einem stationären Bearbeitungszentrum möglich. Hier ist jedoch das Problem gegeben, dass sich Schleifpartikel ablagern können, so dass ein Bearbeitungszentrum eher für einen Grobschliff als für Feinschliffarbeiten geeignet ist. Ferner besteht der Nachteil hoher Investitionskosten. Die bekannten Führungsvorrichtungen von Bearbeitungszentren benötigen im Vergleich zu mobilen Schleifmaschinen einen großen Bauraum und eignen sich insbesondere für die Bearbeitung von relativ kleinen Platten. Bei großen Platten besteht jedoch das Problem, dass die Auflagefläche der stationären Maschine nicht ausreicht. Daher ist es notwendig, dass eine Person die Platte manuell führt oder Rollenböcke das Vorbeiführen der zu bearbeitende Platte an der stationären Schleifmaschine unterstützen. Während die Handführung den Nachteil hat, dass sie zu ungenauen Ergebnissen der Kanten des Werkstückes führt, besteht das Problem, dass Rollenböcke nur bei ebenen Untergrund eingesetzt werden können.

Daher besteht der Bedarf eine mobile, kompakt gebaute und zugleich genau arbeitende Führungsvorrichtung für Schleif- und Polierwerkzeuge insbesondere zum Kantenschleifen und für komplexe Arbeiten wie den Zwischenschliff beim Lackieren bereitzustellen. Dabei sollen die Vorteile der händischen Führung mit den Vorteilen einer stationären Bearbeitung verbunden werden.

Ferner sollte die Führungsvorrichtung folgende Anforderungen erfüllen:
Die Führungsvorrichtung soll eine hohe Präzision bei der Oberflächenbearbeitung gewährleisten und in Abhängigkeit der zu bearbeitenden Oberfläche optimal einstellbar sein. Insbesondere ist es wünschenswert, dass die Führungsvorrichtung für einen Lackzwischenschliff keine starre Verbindung aufweist. Zur Erzeugung von präzisen Geometrien ist allerdings eine starre Verbindung nötig, sodass eine Führungsvorrichtung sowohl einen starren als auch einen nicht starren Betriebsmodus beherrschen sollte. Gleichzeitig sollte die Führungsvorrichtung einfach zu bedienen sein.

Die Verbindung des Werkzeuges mit der Führungsvorrichtung soll lösbar sein, wobei die Verbindungsanordnung auch so adaptierbar sein sollte, dass verschiedene Werkzeuge mit der Führungsvorrichtung verbunden werden können. Im Betrieb sollte die Sichtbarkeit des Arbeitsbereiches möglichst wenig eingeschränkt sein. Der Bauraum der Führungsvorrichtung sollte möglichst klein sein, wobei gleichzeitig eine Demontagemöglichkeit des Werkzeuges gegeben sein soll. Die Führungsvorrichtung sollte so konzipiert sein, dass ein Schleifmittelwechsel möglich ist, wenn das Werkzeug mit der Führungsvorrichtung verbunden ist.

### Beschreibung der Erfindung

Auf Grundlage der Erfindung sollen die oben genannten Aufgaben besser als bei herkömmlichen Werkzeugen zur Oberflächenbearbeitung gelöst werden, die ausschließlich einen steifen Betriebszustand zur Verfügung stellen.

Die oben genannten Aufgaben werden durch eine erfindungsgemäße Führungsvorrichtung, System und Verfahren gemäß den Merkmalen der unabhängigen Ansprüche gelöst. Bevorzugte und vorteilhafte Ausgestaltungen der Erfindung ergeben sich aus den sich an den unabhängigen Ansprüchen anschließenden Unteransprüchen und werden nachfolgend näher beschrieben.

Nach dem Grundgedanken der Erfindung sollen wenigstens zwei Betriebszustände zur Verfügung gestellt werden, wobei das Werkzeug im jeweiligen Betriebszustand bzw. Bearbeitungsmodus sicher festgestellt bzw. eingestellt werden kann.

Gemäß einem ersten Aspekt der Erfindung wird eine Führungsvorrichtung für ein Werkzeug zur Oberflächenbearbeitung eines Werkstückes umfassend wenigstens ein Führungselement, eine Winkelvorrichtung und eine Verbindungsanordnung zum Verbinden der Führungsvorrichtung mit dem Werkzeug bereitgestellt, wobei mittels der Winkelvorrichtung ein vorbestimmter Winkel zwischen einer Ebene oder Gleitebene des wenigstens einen Führungselementes und einer Wirkebene des verbindbaren Werkzeuges einstellbar ist; und wobei die Vorrichtung zwischen wenigstens einem flexiblen Betriebszustand und einem steifen Betriebszustand umstellbar ist.

Auf diese Weise kann die Härte, Elastizität oder Steifigkeit der Führungsvorrichtung verändert werden. Wird beispielsweise der flexible Betriebszustand gewählt, kann die gewünschte Flexibilität für einen Lackzwischenschliff bereitgestellt werden. Mit Hilfe der Winkelvorrichtung kann eine sichere Führung des Werkzeuges gewährleistet werden und damit ein Verkanten oder ein Abkippen, die naturgemäß beim Hantieren eines Werkzeuges an zu bearbeitenden Oberflächen ohne eine Winkelvorrichtung auftreten können, vermieden werden.

Unter dem Begriff "steifer Betriebszustand" soll insbesondere verstanden werden, dass auch bei Krafteinwirkung durch eine das Werkzeug bedienende Person in Richtung der Wirkebene und damit in der Regel in Richtung des zu bearbeitenden Werkstückes bzw. der Schleiffläche der vorbestimmte Winkel fixiert ist. Der flexible Betriebszustand gewährleistet dagegen eine begrenzte Bewegbarkeit der Wirkebene relativ zur Ebene des wenigstens einen Führungselementes d.h. einer Gleitebene, Führungsebene oder Abstützebene.

Unter dem Begriff "Werkzeug zur Oberflächenbearbeitung" soll insbesondere ein Werkzeug wie ein Schleif- oder Poliergerät verstanden werden, das insbesondere zum Schleifen, Lackzwischenschliff, Polieren oder dergleichen, vorgesehen ist.

Gemäß einem weiteren Aspekt der Erfindung weist die Führungsvorrichtung für ein Werkzeug zur Oberflächenbearbeitung eines Werkstückes ferner ein Versteifungselement auf, das ausgelegt ist, den steifen Betriebszustand einzustellen.

Mit Hilfe des Versteifungselementes kann präzise ein vorbestimmter Winkel eingestellt werden. Das Versteifungselement kann bei Bedarf an der Führungsvorrichtung so befestigt oder positioniert werden, dass eine steife, hoch belastbare Führungsvorrichtung bereitsteht. Auf diese Weise kann auch bei hohen Anpressdruck gegen die zu bearbeitende Fläche bzw. Kante eine genaue Werkzeugführung mit dem durch die Winkelvorrichtung vorbestimmten Winkel erfolgen.

Gemäß einem weiteren Aspekt der Erfindung weist die Verbindungsanordnung eine Ausnehmung für das Versteifungselement auf; wobei das Versteifungselement einen drehbaren Exzenterkörper aufweist, der mit einem Ende eines durch die Winkelvorrichtung verlaufenden Verbindungselementes koppelbar ist und ausgelegt ist, in die Ausnehmung der Verbindungsanordnung wahlweise mit Spiel oder ohne Spiel einzugreifen, um den flexiblen Betriebszustand oder den steifen Betriebszustand einzustellen.

Auf diese Weise kann selektiv zwischen dem steifen und dem flexiblen Betriebszustand gewählt werden und damit ein optimales Verhalten des Werkzeuges bei der Oberflächenbearbeitung in Abhängigkeit vom Bearbeitungsprozess gewährleistet werden. Das Umstellen von steif bzw. hart zu weich und vice versa kann mit einem Exzenterkörper schnell manuell beispielsweise mit einem geeigneten Betätigungselement wie mit einem Hebel erfolgen.

Gemäß einem weiteren Aspekt der Erfindung weist die Führungsvorrichtung ferner wenigstens ein elastisches Element zur Einstellung des flexiblen Betriebszustandes auf, wobei das Element ausgewählt ist aus einer Gruppe umfassend:
eine Feder, Dämpfungsplatte, Bolzen mit wenigstens einem elastischen Abschnitt oder eine Kombination der genannten elastischen Elemente.

Auf diese Weise kann vorteilhafterweise eine besonders schonende und genaue Feinstbearbeitung von Oberflächen gewährleistet werden. Diese vorbestimmte Flexibilität kann vorteilhaft für Arbeitsschritte wie den Lackzwischenschliff genutzt werden, die eine besonders feinfühlige und genaue Führung des Schleifgerätes erfordern.

Gemäß einem weiteren Aspekt der Erfindung weist die Winkelvorrichtung ein Spannsystem zum Feststellen und Lösen eines Winkels auf, umfassend ein mechanisches Bedienelement ausgewählt aus der Gruppe umfassend: eine Schraubverbindung, einen Spannhebel, einen Drehknopf oder einen Einrastmechanismus.

Auf diese Weise können Anwender einen großen Winkelberiech fest einstellen, wobei der Winkelbereich vorzugsweise zwischen 43°und 92° liegt.

Gemäß einem weiteren Aspekt der Erfindung weist die Führungsvorrichtung nach einem der vorhergehenden Aspekte ferner wenigstens einen Griff auf, der an der Winkelvorrichtung oder der Verbindungsanordnung oder einem Übergangsbereich zwischen Winkelvorrichtung und Verbindungsanordnung und/oder an dem Führungselement auf der der Führungsebene entgegengesetzten Seite angeordnet ist.

Der Griff kann als bequem zu umgreifenden Abschnitt ausgebildet sein und optional ergonomische Ausformungen aufweisen, um die Handhabung zu verbessern. Neben einem Handgriff an der Verbindungsanordnung, kann zur besseren Führung ein zweiter Handgriff auf der werkzeugfernen Seite des Führungselements angeordnet sein.

Gemäß einem weiteren Aspekt der Erfindung weist der Griff wenigstens ein längs verschiebbares Verlängerungselement auf, das mit einem Gegenelement der Verbindungsanordnung oder der Winkelvorrichtung in Eingriff bringbar ist.

Auf diese Weise kann der Griffbereich in Abhängigkeit von der Bedienperson angepasst und verlängert werden.

Gemäß einem weiteren Aspekt der Erfindung umfasst die Winkelvorrichtung ein Schienensystem.

Durch den Einsatz eines Schienensystems können die gewünschten Winkel einfach verstellt werden. Ein Vorteil der Anwendung eines Schienensystems ist, dass der Arbeitsbereich gut einsehbar ist.

Gemäß einem weiteren Aspekt der Erfindung ist ein auf wenigstens einer bogenförmigen Schiene um einen bestimmten Winkel verschiebbares Element als Griff mit einem Spannsystem ausgebildet.

Auf dem Schienensystem können vorteilhafterweise Markierungen der einzustellenden Winkel angebracht sein. Mittels des Spannsystems kann ein vorbestimmter bzw. gewünschter Winkel festgestellt bzw. arretiert werden.

Gemäß einem weiteren Aspekt der Erfindung ist die Spannrichtung des Spannsystems orthogonal zur Gleitbahn der Schiene angeordnet und in der arretierten Stellung der Winkelvorrichtung sind eine erste Kontaktfläche im Griff und eine zweite Kontaktfläche im Schienensystem reibschlüssig festlegbar.

Auf diese Weise kann ein Spannelement des Spannsystems gegen eine Bahn des Schienensystems gespannt werden, um eine stabile Kraftpaarung zu ergeben.

Gemäß einem weiteren Aspekt der Erfindung weist das Führungselement wenigstens eine Führungsplatte mit wenigstens einem Rollelement und/oder mit wenigstens einem elastischen Element auf.

Gemäß einem weiteren Aspekt der Erfindung ist die Führungsplatte an der werkzeugzugewandten Seite um eine Drehachse drehbar gelagert.

Gemäß einem weiteren Aspekt der Erfindung weist das Führungselement wenigstens eine Aufnahme für eine lösbar befestigbare Gleitplatte, Gleitstruktur, Gleitgewebe und/oder Gleitgewirk mit einer vorbestimmten Gleiteigenschaft in Abhängigkeit einer Werkstücksoberfläche auf.

Gemäß einem weiteren Aspekt der Erfindung ist eine erste Drehachse der Winkelvorrichtung an der oberen Kante des zu bearbeitenden Werkstückes angeordnet.

Gemäß einem weiteren Aspekt der Erfindung weist die Führungsvorrichtung im flexiblen Betriebsmodus ein Winkelspiel von +/- 10%, vorzugsweise +/- 2% des mit der Winkelvorrichtung einstellbaren Winkels auf.

Gemäß einem weiteren Aspekt der Erfindung weist die Führungsvorrichtung ferner einen Anschlag auf, der vorzugsweise zwischen der Winkelvorrichtung und der Verbindungsanordnung angeordnet ist, um im flexiblen Betriebsmodus eine Endlage des Winkelspiels zu dämpfen.

Auf diese Weise kann im flexiblen Betriebszustand im Bereich der Endlage der Schwenkbewegung der Winkelvorrichtung in Bezug auf die Verbindungsanordnung der Anschlag gedämpft werden. Dabei ist der Anschlag vorzugsweise als ein elastisch verformbares Dämpfungselement ausgebildet, um die maximale Schwenkbewegung der Winkelvorrichtung weich zu dämpfen und damit einen harten Anschlag zu vermeiden. Das Dämpfungselement kann ausgewählt sein aus einer Gruppe umfassend: thermoplastisches Polyurethan, Elastomer, Feder oder andere dämpfende oder flexible Werkstoffe.

Gemäß einem weiteren Aspekt der Erfindung wird ein System bereitgestellt, umfassend eine Führungsvorrichtung für ein Werkzeug nach einem der vorhergehenden Aspekte und ein Werkzeug zur Oberflächenbearbeitung.

Gemäß einem weiteren Aspekt des erfindungsgemäßen Systems ist das Werkzeug ein handgeführtes oder wenigstens teilweise automatisch geführtes Schleifelektrowerkzeug.

Dabei kann das Schleifelektrowerkzeug beispielsweise ein Schwing- oder Deltaschleifer oder ein Exzenterschleifer oder ein oszillierendes Multitool sein.

Gemäß einem weiteren Aspekt des erfindungsgemäßen Systems ist wenigstens ein Teil des Führungselementes zum Schleifmittelwechsel in eine Position von der Wirkebene weg verschiebbar.

Auf diese Weise muss nicht das komplette System auseinandergebaut werden, um Schleifmittel bzw. Schleifpapier wechseln zu können. Damit wird das Problem gelöst, dass ansonsten das Schleifpapier durch einen engen Spalt zwischen Maschine und Führungselement bzw. Führungsplatte geführt werden muss.

Gemäß einem weiteren Aspekt der Erfindung wird ein Verfahren zur Oberflächenbearbeitung von Kantenflächen an Werkstücken bereitgestellt, wobei das Verfahren die folgenden Schritte umfasst:
Bereitstellen einer Führungsvorrichtung eines Werkzeuges mit wenigstens einem Führungselement und einer Winkelvorrichtung, welche mit einem Werkzeug verbunden ist; Einstellen eines vorbestimmten Winkels zwischen der Ebene des wenigstens einen Führungselementes und einer Wirkebene des Werkzeuges mittels der Winkelvorrichtung; Auflegen des wenigstens einen Führungselementes der Führungsvorrichtung auf ein zu bearbeitendes Werkstück mit wenigstens einer Kante; Wahlweise Einstellen eines ersten flexiblen Betriebszustandes, in dem die Wirkebene des Werkzeuges relativ zur Bearbeitungsebene zur flexiblen Anpassung an die zu bearbeitende Kantenoberfläche bewegbar ist oder Einstellen eines zweiten steifen Betriebszustandes, in dem ein vorbestimmter Winkel zwischen der Ebene wenigstens eines Führungselementes und einer Wirkebene des verbundenen Werkzeuges fixiert ist.

Gemäß einem weiteren Aspekt der Erfindung wird ein Verfahren zur Nachrüstung eines Werkzeuges mit einer Führungsvorrichtung des Werkzeuges mit wenigstens einem Führungselement; und einer Winkelvorrichtung bereitgestellt, das die folgenden Verfahrensschritte umfasst:
Bereitstellen einer Führungsvorrichtung für ein Werkzeug mit wenigstens dem Führungselement; und der Winkelvorrichtung; und Verbinden des Werkzeuges zur Oberflächenbearbeitung mit der Führungsvorrichtung des Werkzeuges mittels einer Verbindungsanordnung.

Die Anbindung der Maschine kann beispielsweise über den Stoßschutz erfolgen. Eine Schraubverbindung ist nicht zwingend nötig, wenn der Formschluss zwischen Maschine und Stoßschutz bereits eine hohe Steifigkeit aufweist. Zusätzliche Befestigungsmittel wie Schraubverbindungen können jedoch vorteilhafterweise ein durch Vibrationen oder Stöße verursachtes Lösen der Maschine aus dem Stoßschutz verhindern und im Betrieb eine sichere Verbindung des Werkzeuges mit der Verbindungsanordnung gewährleisten.

### Kurze Beschreibung der Figuren

Weitere Merkmale und Vorteile der Erfindung ergeben sich anhand der nachfolgenden Zeichnungen in denen vorteilhafte Ausführungsbeispiele einer erfindungsgemäßen Führungsvorrichtung beispielhaft dargestellt werden, ohne die Erfindung auf die gezeigten Ausführungsbeispiele zu beschränken. Die Zeichnungen zeigen:
Fig. 1a zeigt eine perspektivische Ansicht eines Ausführungsbeispiels der erfindungsgemäßen Führungsvorrichtung mit einem Führungselement, das an der werkzeugzugewandten Seite um eine Drehachse drehbar gelagert ist;
Fig. 1b zeigt eine perspektivische Detailansicht des Führungselementes an die Verbindungsanordnung der Führungsvorrichtung;
Fig. 2a eine perspektivische Ansicht eines weiteren Ausführungsbeispiels der erfindungsgemäßen Führungsvorrichtung von schräg oben mit einem Werkzeug und einer Führungsplatte im zusammenmontierten Zustand bzw. in der Arbeitsposition;
Fig. 2b eine Vorderansicht der Führungsvorrichtung der Fig. 2a;
Fig. 2c eine Schnittansicht entlang dem Schnitt A-A der Fig. 2a d.h. entlang der Längsachse des Handgriffes der Führungsvorrichtung;
Fig. 3 eine perspektivische Ansicht der in Fig. 2a bis 2c gezeigten Führungsvorrichtung ohne Werkzeug;
Fig. 4 Explosionsansicht der in Fig. 3 gezeigten Führungsvorrichtung ohne Werkzeug;
Fig. 5a eine seitliche Explosionsansicht der Verbindungsanordnung der Führungsvorrichtung und einem Werkzeug;
Fig. 5b perspektivische Explosionsansicht der Haltebügel der Verbindungsanordnung und des Werkzeuges der Fig. 5a;
Fig. 6 eine perspektivische Ansicht eines weiteren Ausführungsbeispiels eines oberen Haltebügels einer Verbindungsanordnung;
Fig. 7 eine perspektivische Ansicht eines weiteren Ausführungsbeispiels der Führungsvorrichtung mit einer Führungsplatte im gelösten Zustand zum Schleifmittelwechsel;
Fig. 8a eine Vorderansicht der Führungsvorrichtung der Fig. 7;
Fig. 8b eine Schnittansicht entlang dem Schnitt B-B der Fig. 8a;
Fig. 8c zeigt eine perspektivische Detailansicht des Drehknopfes mit Spannelement;
Fig. 9 eine Seitenansicht der Führungsvorrichtung mit Werkzeug und mit der Führungsplatte des Führungselementes im gelösten Zustand zum Schleifmittelwechsel;
Fig. 10a eine Seitenansicht der Führungsvorrichtung ohne Werkzeug;
Fig. 10b die Schnittansicht entlang dem Schnitt E-E der Fig. 10a im steifen bzw. starren Betriebszustand;
Fig. 10c die Schnittansicht entlang dem Schnitt C-C der Fig. 10a;
Fig. 11 a eine Führungsvorrichtung im flexiblen Betriebszustand ohne ein Werkzeug;
Fig. 11b die Schnittansicht entlang dem Schnitt D-D der Fig. 11a;
Fig. 12 eine Führungsvorrichtung im steifen Betriebszustand mit Werkzeug mit einem festgestellten flachen Winkel;
Fig. 13 eine Führungsvorrichtung im steifen Betriebszustand mit Werkzeug mit einer weiteren beispielhaften Winkeleinstellung;
Fig. 14 ein erfindungsgemäßes Verfahren zur Oberflächenbearbeitung von Kantenflächen an Werkstücken; und
Fig. 15 ein Verfahren zur Nachrüstung eines Werkzeuges.

Die Darstellungen sind schematisch und nicht zwingend maßstabsgerecht. Sie zeigen darüber hinaus nicht alle Details, sondern beschränken sich zum Teil auf die Darstellung der erfindungswesentlichen Einzelheiten sowie weiterer Merkmale, die die Erläuterung und Beschreibung der Erfindung erleichtern. Gleiche Elemente in den unterschiedlichen Figuren werden mit den gleichen Bezugszeichen bezeichnet. In der folgenden Figurenbeschreibung werden verschiedene räumliche Bezeichnungen oder Bezeichnungen in Bezug auf Richtungen angegeben. Es wird darauf hingewiesen, dass Bezeichnungen wie oben unten, vertikal, horizontal oder erste, zweite und dritte zum besseren Verständnis der Figuren verwendet werden, aber die Ausführungsbeispiele nicht auf die angegebenen Bezeichnungen beschränken.

### Detaillierte Beschreibung der Figuren

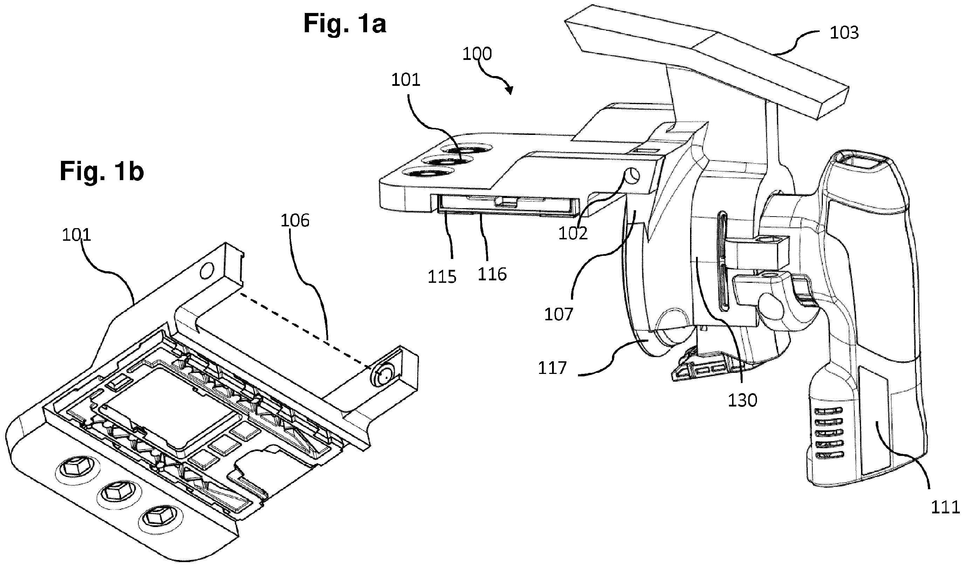

Fig. 1a zeigt eine perspektivische Ansicht eines ersten Ausführungsbeispiels der erfindungsgemäßen Führungsvorrichtung 100. Die Führungsvorrichtung weist einen Stoßschutz 107 oder Protektor auf, der bevorzugt umlaufend ausgebildet ist und dazu dient, einerseits den Schleifteller 117 und damit das Getriebe des Werkzeuges und anderseits Oberflächen oder eine Bedienperson zu schützen. An dem Stoßschutz 107 des Werkzeuges 111 ist in der Ausführungsform, die in Fig. 1a gezeigt wird, die Führungsplatte 115 bzw. das Führungselement 101 angebunden. Die Schnittstelle zwischen dem Führungselement 101 und dem Stoßschutz 107 kann in dieser Ausführungsform als Winkelvorrichtung verwendet werden, da die Führungsplatte drehbar gelagert ist. In anderen Worten weist die Führungsvorrichtung 100 ein Führungselement 101 auf, das an der dem Werkzeug 111 zugewandten Seite um eine Drehachse 106 drehbar gelagert ist.

Auf diese Weise kann die Drehachse 106 nahe der Wirkebene des Schleiftellers 117 im Wesentlichen auf Höhe des Stoßschutzes 107 angeordnet sein. Das Werkzeug 111 mit dem Schleifteller 117 ist zur Oberflächenbearbeitung ausgelegt und kann bei einer so angeordneten Drehachsenlage insbesondere Kanten mit einem regelmäßigen und genauen Schleifbild bearbeiten.

Mittels einer Verbindungsanordnung 130 ist das Werkzeug 111 mit der Führungsvorrichtung 100 so verbunden, dass das Werkzeug 111 vertikal zur Ebene der Führungsplatten angeordnet ist. Andere Anordnungen wie eine horizontale oder abgewinkelte Position des Werkzeuges 111 sind denkbar, solange die Schwerpunktlage des angebundenen Werkzeuges ein Abkippen der Führungsvorrichtung so weit wie möglich vermeidet. Für eine verbesserte Handhabung der Führungsvorrichtung wird ein Griffoberteil 103 bereitgestellt.

In der gezeigten Ausführungsform wird die Verbindungsanordnung 130 zum einen zum Halten des Griffes 103 verwendet und zum anderen zum Halten des Stoßschutzes 107. Der Griff 103 kann auch ergonomisch an die Hand angepasst werden und andere nicht gezeigte Griffausführungen können realisiert werden. In Abhängigkeit von den zu verbindenden Werkzeugen kann die vorteilhafterweise formschlüssige Verbindung mit der Verbindungsanordnung 130 anders als in Fig. 1a gestaltet sein.

In Fig. 1b wird die Führungsplatte bzw. das Führungselement 101 im Detail von schräg unten gezeigt und mit dem Bezugszeichen 106 die Drehachse zur Winkeleinstellung als Strichlinie gezeigt. Das Führungselement 101 weist eine Führungsplatte 115 auf, die eine Laufsohle 116 am unteren Abschnitt aufweist. Die Laufsohle kann beispielsweise aus einem weichem Material wie Velours oder Ähnliches sein. Die Laufsohle ist in Abhängigkeit von unterschiedlichen Untergründen wechselbar und kann nicht nur weich sondern auch hart oder verschleißfest ausgebildet sein.

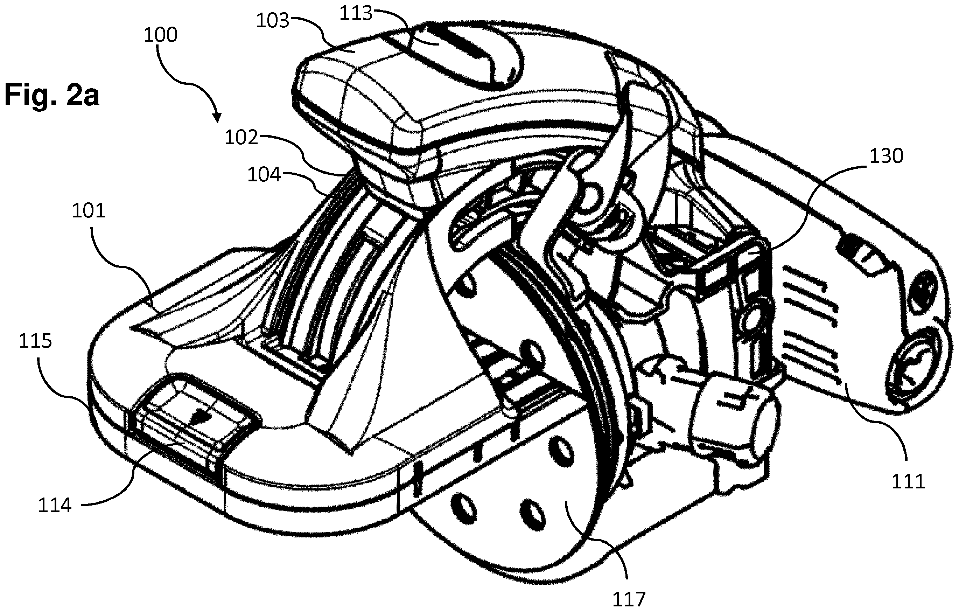

Fig. 2a zeigt eine perspektivische Ansicht eines weiteren Ausführungsbeispiels der erfindungsgemäßen Führungsvorrichtung 100 von schräg oben mit einem Werkzeug. Diese Ausführungsform weist eine alternative Griffgeometrie als in Fig. 1a auf. Der Griff 103 bzw. das Griffoberteil ist nicht nur mit der Verbindungsanordnung 130 verbunden, sondern auch mit der Winkelvorrichtung 102. Zur Einstellung von gewünschten Winkeln wird hier ein Schienensystem verwendet und ein verschiebbarer Winkelhalter 104. Damit weist diese Führungsvorrichtung einen virtuellen Drehpunkt bzw. Drehachse auf.

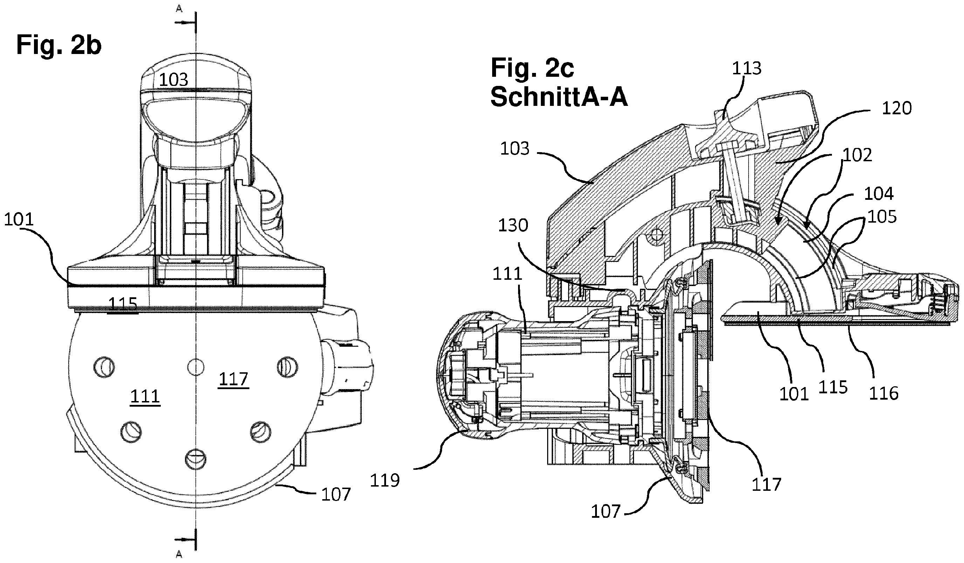

Der Aufbau des Schienensystems unterteilt sich in die folgende drei Bauteilgruppen:
Erste Gruppe 101:
   Das Führungselement 101, die eine Führungsplatte 110 aufweist. Weiterhin weist das Führungselement 101 eine Aufnahme für die im Griff 103 angeordneten Schienen auf.
Zweite Gruppe 120:
   Der Griffbereich 103, der im unteren Teil mit den Aufnahmeschienen des Führungselementes in Eingriff bringbare Schienen und bogenförmige Führungsbahnen 105 aufweist, wie sie beispielsweise in dem Schnitt A-A der Fig. 2c gezeigt werden.
Dritte Gruppe 130:
   Die Verbindungsanordnung 130 verbindet die Griffbaugruppe (2. Gruppe) mit dem Werkzeug 111.

Fig. 2b zeigt eine Vorderansicht der Führungsvorrichtung der Fig. 2a. In dieser Ansicht ist von dem Werkzeug 111 insbesondere der Schleifteller 117 zu sehen. Ferner wird in der Fig. 2b der Schnitt A-A angezeigt, der entlang der Mittelachse des Griffes 103 und der Mittelachse des Führungselementes 101 sowie der Führungsplatte 115 geht.

Dieser Schnitt A-A wird in Fig. 2c gezeigt. Fig. 2c zeigt das Werkzeug 111 mit einem eigenen Griffbereich 119 sowie den Schleifteller 117. Der Stoßschutz 107 befindet sich nahe des Schleiftellers 117 und ist Teil der Verbindungsanordnung 130. Die Verbindungsanordnung 130 verbindet die Griffbaugruppe 120 mit dem Werkzeug 111.

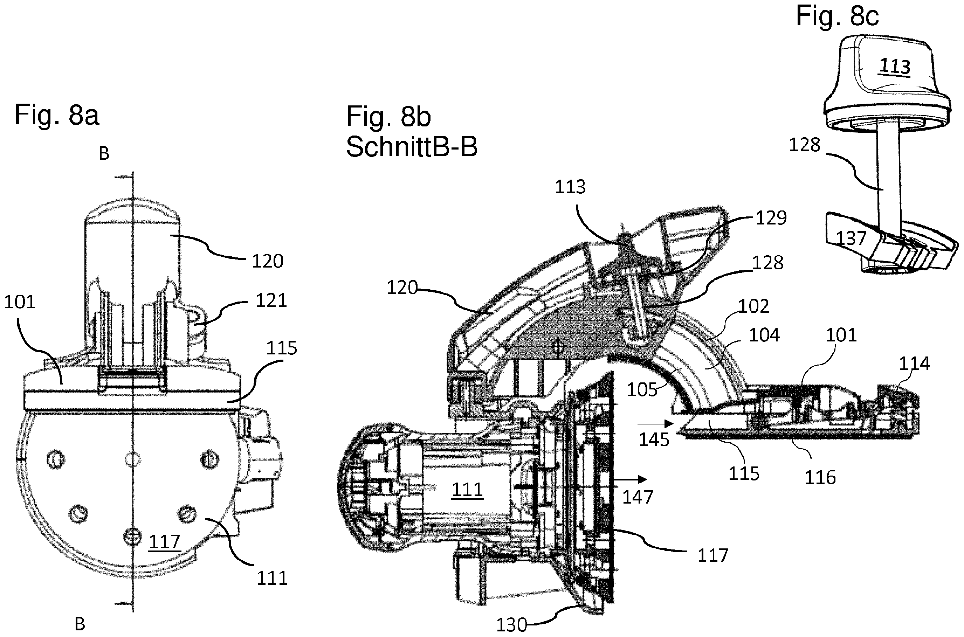

Das Führungselement 101 mit der Führungsplatte 115 und Gleitsohle 116 wird mittels des Schienensystems mit der Griffbaugruppe 120 verbunden. Die Winkelvorrichtung 102 ist als Schienensystem ausgebildet, welches verschiebbare Winkelhalter 104 und bogenförmige Führungsbahnen 105 ausweist. Ein vorbestimmter Winkel ist fest einstellbar mittels des im Griffoberteil 103 eingeführten Drehknopfs 113 und einem Gegenlager 137 (vollständig in Fig. 8c gezeigt), welches das Schienensystem verspannt. Im gezeigten Beispiel beträgt der gewählte Winkel ca. 90°.

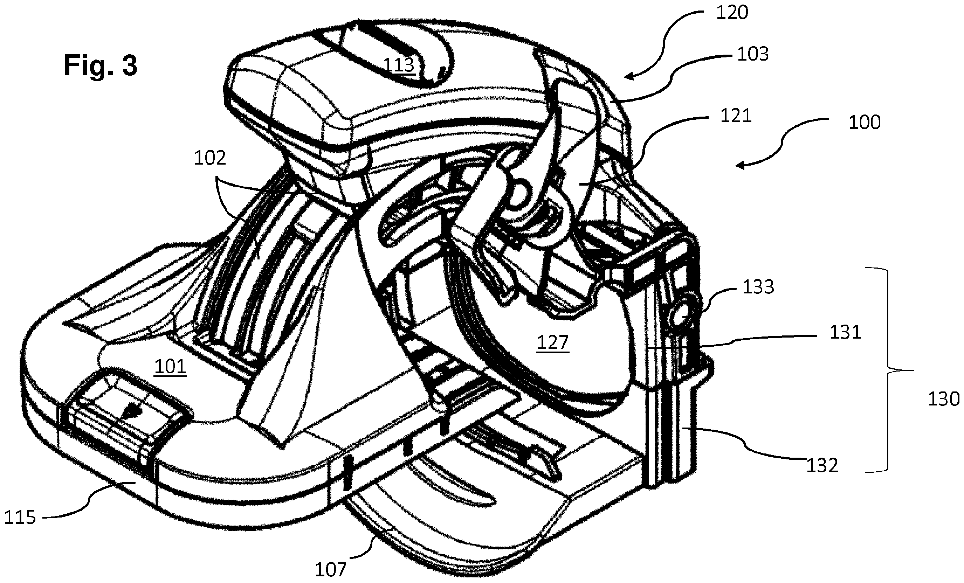

Fig. 3 zeigt eine perspektivische Ansicht der in Fig. 2a bis 2c gezeigten Führungsvorrichtung 100 ohne ein Werkzeug. Diese Ansicht zeigt die Verbindungsanordnung 130 und deren Bauteile bzw. Bauteilgruppen, 101, 120 und 130. In der Verbindungsanordnung 130 kennzeichnet das Bezugszeichen 131 den oberen Haltebügel für das (nicht gezeigte) Werkzeug, während 132 den unteren Haltebügel mit Stoßschutz 107 anzeigt. Die Haltebügel 131 und 132 bilden in der gezeigten Variante eine ovale Aufnahme 127 mit einer Nut oder Rippen, in denen das Werkzeug bzw. der Werkzeughals formschlüssig und beidseitig aufgenommen werden kann. In Abhängigkeit der Form des aufzunehmenden Werkzeuges kann die Form der Aufnahme 127 bzw. die Form einer oder mehrerer Nuten und/oder formschlüssiger Rippen variieren. Auf diese Weise kann eine steife und sichere Anbindung an ein Werkzeug oder eine Maschine erfolgen. Zur Aufnahme des Werkzeuges (vgl. Fig. 2a, die eine Werkzeuganbindung zeigt) kann der untere Haltebügel 132 von dem oberen Haltebügel 131 gelöst werden.

Die Mittelachse des Schwenklagers 133 bildet die Schwenkachse um die die Griffbaugruppe 120 der Führungsvorrichtung im flexiblen Betriebsmodus schwenkbar gelagert ist. Die Schwenkachse liegt vorzugsweise nahe oder in der Schnittachse der Mittelebene des zu bearbeitenden Werkstückes und der vertikal angeordneten Z-Ebene durch den Schwerpunkt der Führungsvorrichtung. Das Winkelspiel für den flexiblen Betriebsmodus kann durch das Spannelement 121 in Abhängigkeit von der Stellung wahlweise zugelassen werden oder nicht zugelassen werden. Die Winkelvorrichtung 102 kann in einen vorbestimmbaren Winkel mit dem Drehknopf 113 eingestellt werden.

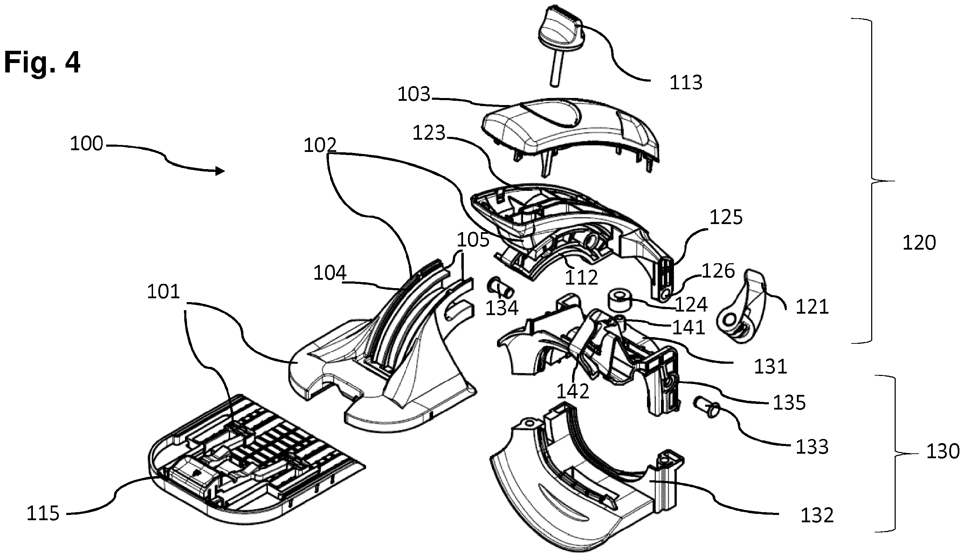

Fig. 4 zeigt eine Explosionsansicht der in Fig. 3 gezeigten Führungsvorrichtung. Die erste Baugruppe des Führungselementes 101 weist an der Unterseite die einfügbare Führungsplatte 115 und Gleitelemente auf. An der Unterseite dieser Führungsplatte 115 können wahlweise Rollelemente oder elastische Elemente befestigt werden. Ferner kann die Führungsplatte 115 an der Unterseite eine Aufnahme aufweisen für lösbare und befestigbare Elemente, die ausgewählt sind aus der Gruppe umfassend: Gleitsohle 116, Gleitstruktur, Gleitgewebe, Gleitgewirk und eine Kombination der genannten Elemente.

An der Oberseite des Führungselementes 101 ist mittig und auf der der Verbindungsanordnung zugewandten Seite das Schienensystem für die Winkelvorrichtung 102 angeordnet. Dieses Schienensystem weist den verschiebbaren Winkelhalter 104 und die bogenförmigen Führungsbahnen 105 auf. Die Führungsbahnen 105 können in die zweite Baugruppe 120, d.h. insbesondere in die Schienen 112 der Winkelvorrichtung 102 eingreifen. Oberhalb des Schienensystems der Winkelvorrichtung 102 ist der Griffbereich angeordnet mit einem Griffoberteil 103 und einem Griffunterteil 123. Die Griffbaugruppe 120 kann mit dem Drehknopf 113 und einem in dem Schienensystem geführten Gegenelement (siehe Bezugszeichen 137 in Fig. 8c) festgelegt werden.

Weiterhin weist die Griffbaugruppe 120 an ihrem unteren Ende eine Haltevorrichtung 125 auf, die konfiguriert ist, das Schwenklager 133 aufzunehmen in der Aufnahme 126. Mit Hilfe des Schwenklagers 133 und 134 ist die Haltevorrichtung 125 der Griffbaugruppe 120 mit der Verbindungsanordnung 130 verbindbar. Mittels dem Spannelement 121 kann eine Verschwenkbarkeit der Griffbaugruppe 120 in Bezug auf die Verbindungsandordnung 130 in flexiblen Betriebsmodus eingestellt werden.

Die dritte Baugruppe der Verbindungsanordnung 130 weist wie zuvor beschrieben den oberen und unteren Haltebügel 131, 132 auf. Der obere Haltebügel weist eine Aufnahme 135 für das Schwenklager 133 auf. Auf der gegenüberliegenden Seite ist ebenfalls eine Aufnahme (nicht gezeigt) für ein weiteres Schwenklager 134 vorgesehen. Auf der hinteren Kante des oberen Haltebügels 131 ist ein Halteelement 141 in Form eines Pins vorgesehen. Dieser Pin 141 kann das Dämpfungselement 124 aufnehmen. Dieses Dämpfungselement 124 dient als Anschlag, um eine Endlage des Winkelspiels im flexiblen Betriebsmodus der Führungsvorrichtung 100 zu dämpfen. Ferner weist auf der Oberseite der Haltebügel 131 eine Aufnahme 142 für das Spannelement 121 auf.

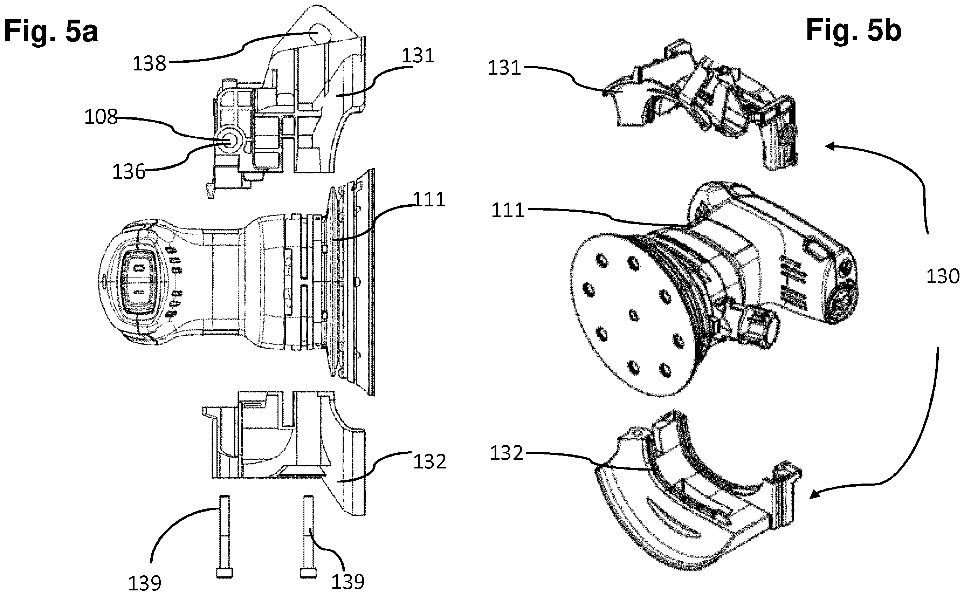

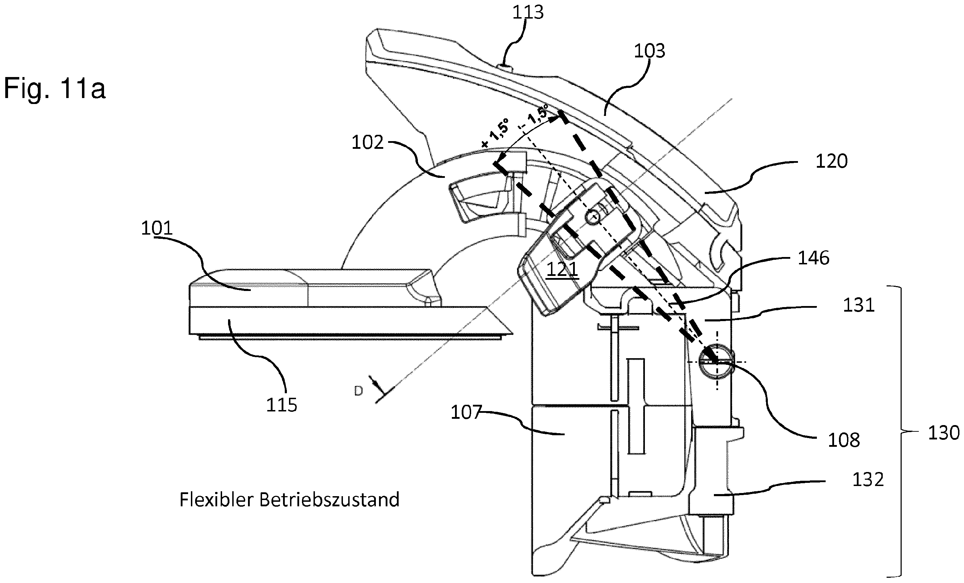

Fig. 5a und Fig. 5b zeigen lediglich die dritte Baugruppe bzw. die Verbindungsanordnung 130 im nicht montierten Zustand mit einem Werkzeug 111. Der obere Haltebügel 131 weist an der oberen Seite ein Langloch 138 auf. Im flexiblen Betriebsmodus wird ein Winkelspiel um die Schwenkachse 108 ermöglicht. Wie ein Winkelspiel mittels einer entsprechenden Stellung eines Exzenterhebels ermöglicht wird, wird z.B. in der Fig. 11a. illustriert.

Fig. 5a zeigt zudem die Aufnahme 136 für das in Fig. 4 gezeigte Schwenklager 135.

Der untere Haltebügel 132 kann mit dem oberen Haltebügel 131 nach Einfügen des Werkzeuges mittels der Verbindungselemente 139 verbunden werden. Diese Verbindungselemente 139 können beispielsweise Schraubverbindungen sein und gewähren sicheren Halt bei Vibrationen, wie sie im Betrieb vorkommen.

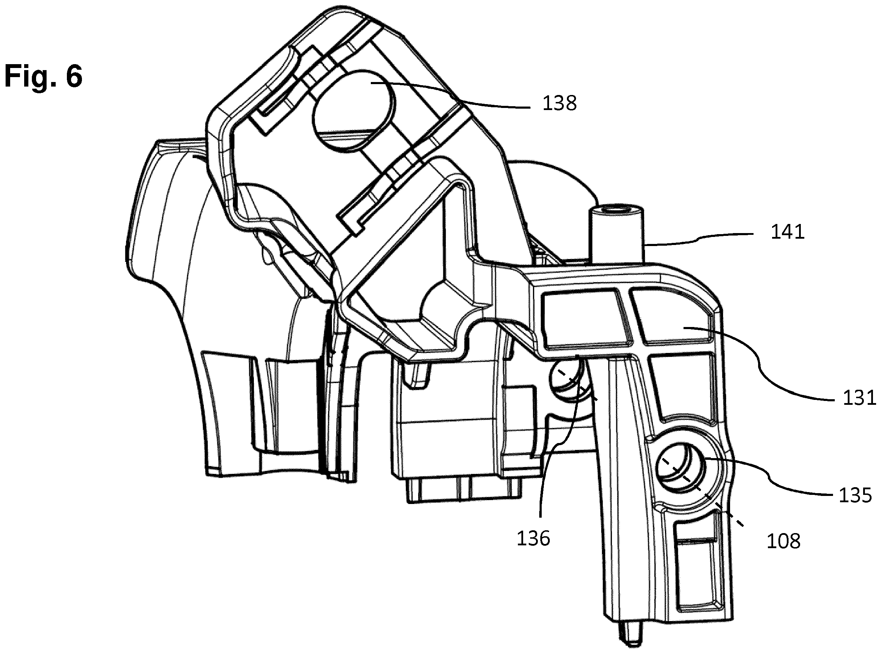

Fig. 6 zeigt eine perspektivische Ansicht eines weiteren Ausführungsbeispiels eines oberen Haltebügels 131 einer Verbindungsanordnung 130. Bei dieser perspektivischen Darstellung können beide Aufnahmen 135, 136 für die nicht gezeigten Schwenklager 134 und 133 gesehen werden. Zudem ist ein Halteelement 141 bzw. Pin zur Aufnahme eines Dämpfungselementes bzw. -anschlages 124 zu sehen. Ferner ist auch hier das Langloch 138 dargestellt, das die Schwenkbarkeit im flexiblen Betriebsmodus ermöglicht bzw. begrenzt. Durch die gestrichelte Linie 108 ist die Drehachse oder Schwenkachse 108 des anschließbaren Werkzeuges dargestellt; die mittig durch die Aufnahmen 135, 136 verläuft.

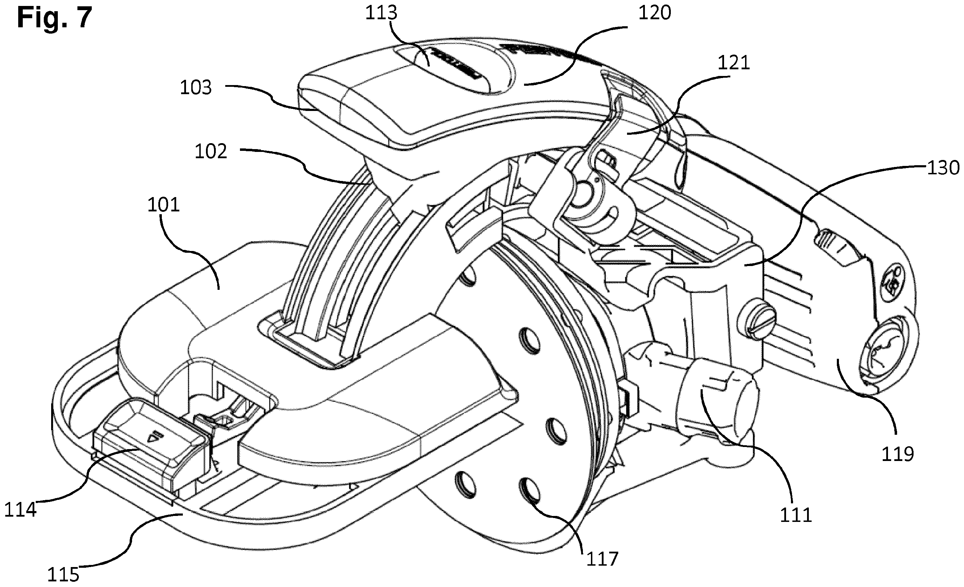

Fig. 7 zeigt eine perspektivische Ansicht eines weiteren Ausführungsbeispiels der Führungsvorrichtung mit einer Führungsplatte 115 im gelösten Zustand. Dieser gelöste Zustand ist zum Schleifmittelwechsel geeignet. Mit Hilfe des Betätigungselementes 114 bzw. eines Drückers kann die Führungsplatte 115 von dem oberen Teil des Führungselementes 101 weg von dem Werkzeug verschoben werden. Auf diese Weise muss nicht das Werkzeug 111 mit seinem Griff oder dem Schleifmittel 117 aus der Verbindungsanordnung 130 herausgenommen werden und es kann Zeit beim Schleifmittelwechsel eingespart werden.

Ein weiterer Vorteil der Verschiebbarkeit der Führungsplatte ist, dass nicht die Winkelvorrichtung zum Schleifmittelwechsel gelöst werden muss, sondern die eingestellte Position der Griffbaugruppe 120 in Bezug zu dem Winkelhalter gleichbleiben kann. In anderen Worten, nach einem Schleifmittelwechsel kann die vorherige Winkelposition weiterverwendet werden und eine genaue Bearbeitung der Oberfläche bzw. der Kante kann somit erfolgen.

Die in der Fig. 7 gezeigte Ausführungsform zeigt ein Spannelement 121, das eine andere Geometrie als beispielsweise das in Fig. 4 gezeigte Beispiel aufweist. Mehrere Varianten der Geometrie für die Spannelemente 121 sowie der Drehknopf 113 sind möglich. An Stelle des Drehknopfes 113 kann als Spannsystem zum Feststellen und Lösen des vorbestimmbaren Winkels beispielsweise ein mechanisches Bedienelement ausgewählt werden aus der Gruppe umfassend eine Schraubverbindung, einen Spannhebel, einen Exzenterspanner oder einen Einrastmechanismus.

Fig. 8a zeigt eine Vorderansicht der Führungsvorrichtung, wobei die Führungsplatte gelöst ist. In dieser Ansicht ist von dem Werkzeug 111 im unteren Abschnitt insbesondere der Schleifteller 117 zu sehen. Ferner wird in der Fig. 8a der Schnitt B-B angezeigt, der entlang der Mittelachse der Griffbaugruppe 120 und der Mittelachse des Führungselementes 101 sowie der Führungsplatte 115 geht.

Fig. 8b zeigt den in Fig. 8a gezeigten Schnitt B-B. Die in Fig. 8b gezeigte Stellung der Führungsplatte 115 ist die gelöste Stellung der Führungsplatte 115. Nachdem der Drücker bzw. das Betätigungselement 114 betätigt worden ist, kann in Richtung des Pfeiles 145 eine Verschiebebewegung zum Lösen der Führungsplatte 115 ausgeführt werden. Nach der Verschiebung der Führungsplatte 115 ist ausreichend Platz zwischen dem werkzeugseitigen Ende der Führungsplatte 115 und dem Schleifmittel 117 vorhanden, um das Schleifmittel zu wechseln. Das Abnehmen des Schleifmittels wird hier mit dem Pfeil 147 angedeutet.

Die Verbindungsanordnung 130 ist so geformt, dass der Formschluss zwischen Maschine und Verbindungsanordnung 130 eine hohe Steifigkeit aufweist. Die Wandstärken sollen bei den Bauteilen nicht größer als bspw. 4 mm sein, damit diese Bauteile problemlos durch ein Spritzgussverfahren herstellbar sind. Gleichzeitig sind die Wandstärken so gewählt, dass die Steifigkeit des Endproduktes gewährleistet wird. Die dargestellte Zeichnung ist nicht maßstabsgetreu und es können auch anderen Wandstärken denkbar sein, solange sie die notwendigen Steifigkeitsbedingungen erfüllen. Es ist vorteilhaft, wenn das Material der Führungsvorrichtung so gewählt ist, dass die flexible Winkeleinstellung, und damit die Weichheit, nicht vom Material abhängig ist.

In dem in Fig. 8b dargestellten Ausführungsbeispiel wird gezeigt, dass ein Schleifmittelwechsel ohne Verstellung der Winkelvorrichtung 102 möglich ist. Die feste Winkeleinstellung ist mittels des Drehknopfes 113 leicht einstellbar. Sie ist mit Hilfe eines Spannmechanismus manuell durch Drehung einstellbar. Dieser Spannmechanismus zwischen Griffoberteil und Schienensystem der Winkelvorrichtung 102 kann durch verschiedene Varianten bereitgestellt werden. In der in Fig. 8a gezeigten Variante ist ein Exzenterhebel 212 als Spannmechanismus für die verschiedenen Betriebsmodi vorgesehen.

Fig. 8c zeigt den Spannmechanismus des Schienensystems d.h. den Drehknopf 113 der Fig. 8b in einer perspektivischen Detailansicht. Der Drehknopf 113 ist mit einer Gewindestange 128 verbindbar sowie mit einem Gegenelement 137. Das Gegenelement 137 fungiert als Spannelement oder Druckscheibe und kann die benötigte Spannung über die Drehbewegung des Drehknopfes 113 erzeugen. Dabei wird zum Spannen die Druckscheibe bzw. das Gegenelement 137 gegen eine bogenförmige Führungsbahn des Schienensystems gepresst. Auf diese Weise kann der Winkelhalter 104 mit der Griffbaugruppe 120 fest verbunden werden.

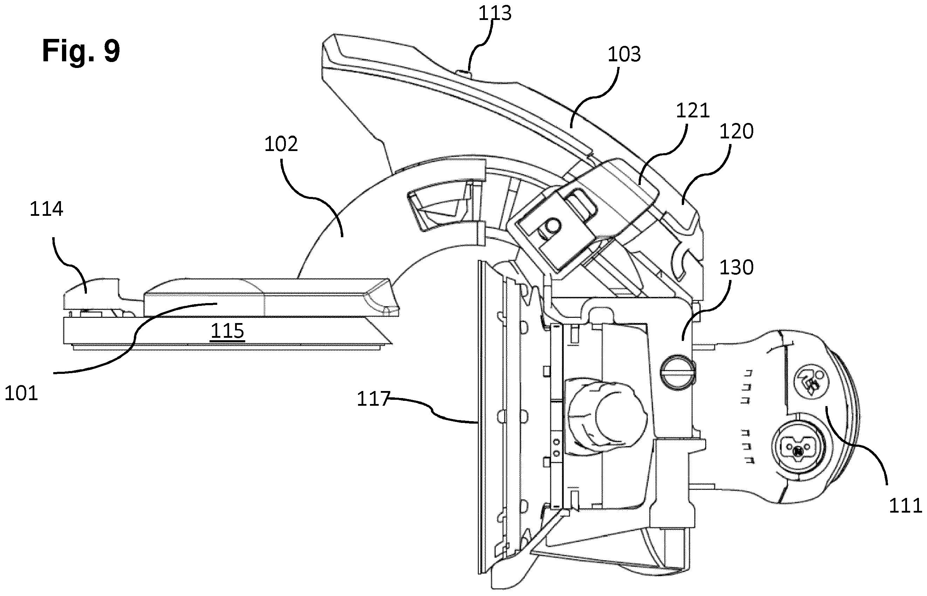

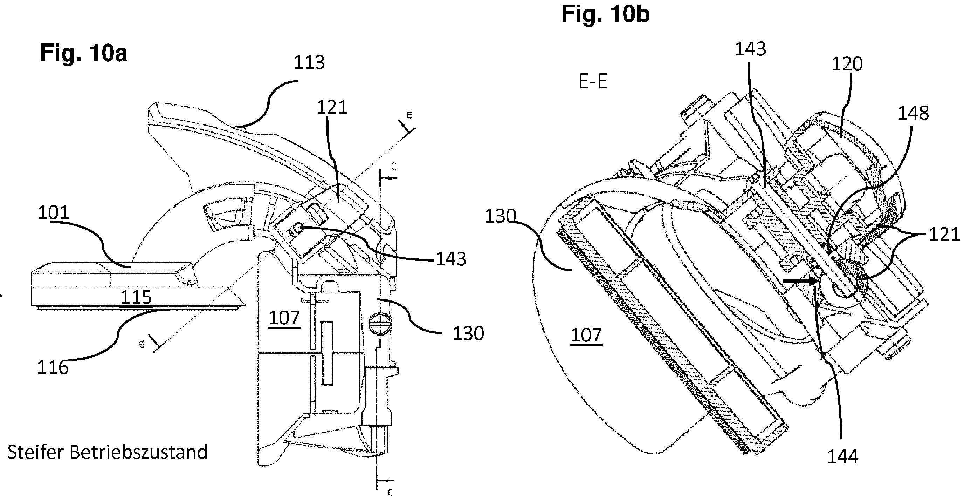

Fig. 9 zeigt eine Seitenansicht der Führungsvorrichtung mit Werkzeug 111 und mit der Führungsplatte 115. Fig. 9 zeigt den gelösten Zustand zum Schleifmittelwechsel. Das Schleifmittel 117 hat genügend Raum um ausgetauscht zu werden. In den folgenden Figuren, Fig. 10a und 10b werden Details der in Fig. 9 gezeigten Führungsvorrichtung gezeigt ohne das Werkzeug 111.

Fig. 10a zeigt die Führungsvorrichtung der Fig. 9 im zusammenmontierten Zustand, d.h. die Führungsplatte 115 ist nun wesentlich näher an dem Stoßschutz 107 angeordnet als in der zuvor in der Fig. 9 gezeigten gelösten Stellung. Fig. 10a zeigt einen Exzenterhebel 121, der sich in der gespannten Stellung befindet und somit einen steifen Betriebszustand herstellt. Fig. 10a zeigt den Schnitt E-E an, der in Fig. 10b gezeigt wird.

Fig. 10b ist der Schnitt E-E, der durch die Spannschraube 143 gelegt wurde. Die Spannschraube 143 kann optional ein elastisches Federelement aufweisen, wie zum Beispiel eine Feder 148. Mit der Spannschraube 143 und dem gezeigten Federelement 148 kann das System gespannt werden, d.h. das Schienensystem 120 mit der Verbindungsanordnung 130 fest verbunden werden. Der Exzenterhebel 121 wird in der in Fig. 10b gezeigten Stellung zur Festlegung der Griffbaugruppe in Bezug zur Verbindungsanordnung verwendet. Eine Spannung des Exzenterhebels 121 folgt gegen das Gegenelement 144. In der gezeigten Stellung Fig. 10b des Exzenterhebels 121 liegt die Spannfläche des Exzenterhebels 121 an der Gegenfläche des Gegenelementes 144 an, sodass sich die Führungsvorrichtung im steifen Betriebszustand befindet. Die im gespannten Zustand entstehende Kraftpaarung zwischen dem Gegenelement 144 und dem Spannelement 121 wird hier schematisch mit einem Pfeil gezeigt.

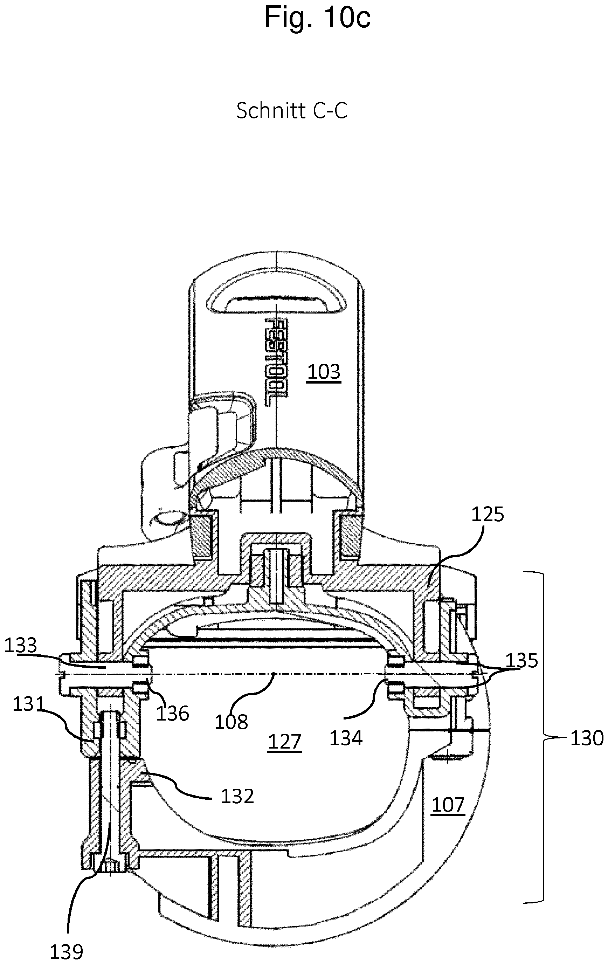

Fig. 10c zeigt den Schnitt C-C, der in Fig. 10a gezeigten Führungsvorrichtung im steifen Betriebszustand. In der unteren Hälfte der Fig. 10c sieht man die Verbindungsanordnung 130 mit dem oberen Haltebügel 131 und dem unteren Haltebügel 132 und Stoßschutz 107. Die Haltebügel 131, 132 werden mit dem Verbindungselement 139 zusammengehalten. Dies kann beispielsweise eine Schraube wie im gezeigten Beispiel sein.

Der Schnitt C-C zeigt die Drehachse 108 des Werkzeuges, wobei die Drehachse des Werkzeuges hier mit einer Strichpunkt-Linie gekennzeichnet wird. Diese Achse verläuft mittig zentral durch die Schwenklager 133 und 134, die durch die jeweiligen Aufnahmen (135, 136) aufgenommen werden. Eine Drehbarkeit um die Drehachse ist jedoch im steifen Betriebszustand blockiert. In dem steifen Betriebszustand ist die Haltevorrichtung 125 in Bezug auf die Baugruppe der Verbindungsanordnung 130 nicht verschwenkbar. Im Gegensatz dazu zeigt die folgende Fig. 11a den flexiblen Betriebszustand.

Fig. 11a zeigt eine Führungsvorrichtung im flexiblen Betriebszustand ohne ein Werkzeug. Im flexiblen Betriebszustand kann die Führungsplatte 115 flexibel in Bezug auf die Wirkebene eines Werkzeuges (hier nicht gezeigt) bei der Oberflächenbearbeitung reagieren. Flexibilität wird in Fig. 11a schematisch mit den fett gezeichneten Strichlinien, die sich in der Drehachse 108 schneiden, dargestellt.

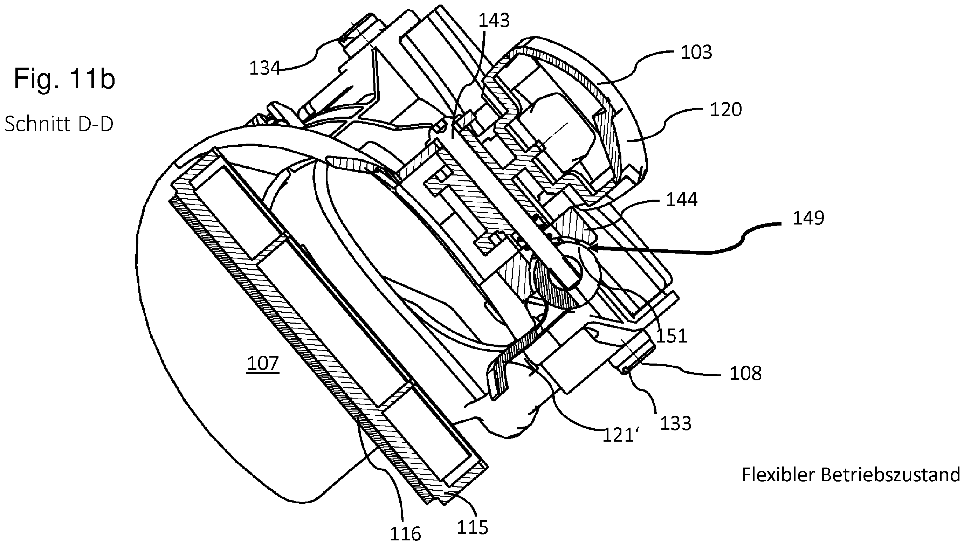

In dem flexiblen Betriebszustand ist in der hier gezeigten Variante der Exzenterhebel 121 Richtung Führungsplatte geklappt. In dieser Stellung kann die Baugruppe des Griffes 120 sowie das Führungselement 101 in Bezug zu der Verbindungsanordnung 130 verschwenkt werden. Die Verschwenkbarkeit um die Drehachse 108 ist jeweils +1,5° zur Mittelachse 146 hin bzw. -1,5 Grad von der Mittelachse weg (siehe Pfeile). Der Exzenterhebel 121 lässt eine Bewegung bzw. ein Spiel um die genannten Gradzahlen zu. Alternativ sind auch größere Winkelbereiche wie +/- 10° bei entsprechend größeren Abstand des Gegenelementes 144 zu den jeweiligen Gegenflächen 151 des Exzenterhebels 121 einrichtbar. Dieser Abstand bzw. Spiel 149 wird im Detail in der Schnittdarstellung D-D bzw. in der Fig. 11b gezeigt.

Fig. 11b zeigt den Schnitt D-D, wo der Exzenterhebel 121' in Richtung Führungsplatte bewegt wurde. In dem gezeigten Beispiel ist bei dieser Exzenterhebelstellung 121' ein flexibler Betriebszustand realisiert. In dem vorliegenden Ausführungsbeispiel besteht in dieser Stellung des Exzenterhebels 121' kein Kontakt zu den Gegenelementen 144. In anderen Worten wird ein Spiel 149 zwischen der Gegenfläche 151 des Exzenterhebels 121' und dem Gegenelement 144 zugelassen und damit der flexible Betriebszustand erreicht. Durch das Spiel kann die Führungsplatte 115 und die darin angebundene Baugruppe des Griffes 120 um die Drehachse 108 geschwenkt werden. Wie in den vorherigen Figuren gezeigt, wird die Schwenkung um die Schwenklager 133 und 134 realisiert.

Die Führungsplatte 115 hat eine Lauf- bzw. Gleitzone, die beispielweise aus Velours angefertigt sein kann. Auf diese Weise können empfindliche Oberflächen geschützt werden.

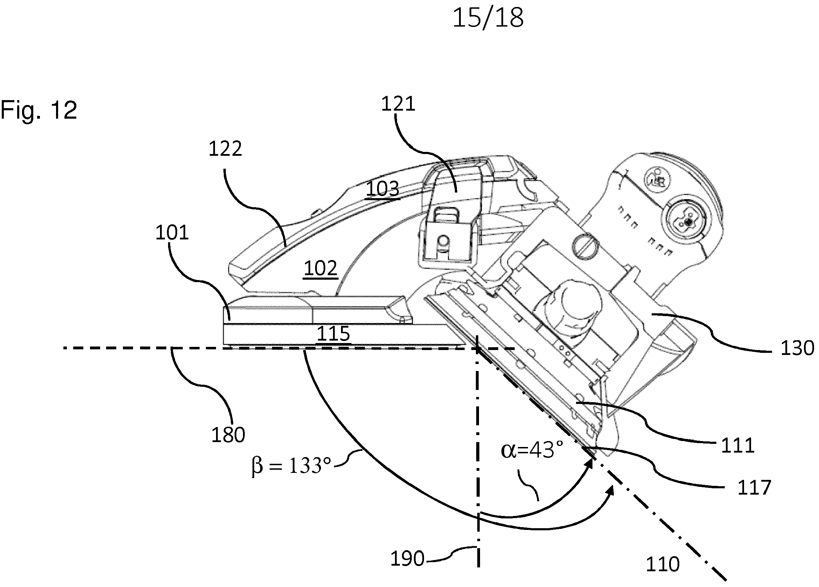

Fig. 12 zeigt eine Führungsvorrichtung im steifen Betriebszustand, wo der Exzenterhebel 21 in der entsprechenden Aufnahme in den Griffbereich 103 positioniert ist. Im steifen Betriebszustand ist es besonders wichtig, die vorgegebenen Winkel zuverlässig einzuhalten. In diesem Fall ist ein Winkel β von 133° zwischen der zu bearbeitenden Kantenfläche und der Führungsebene 180 gewünscht. Die Wirkebene bzw. Bearbeitungsebene des Schleiftellers 117 des Werkzeuges 111 ist hier mit einer Strichpunktlinie 110 gekennzeichnet. Wird eine Kante mit dieser Winkelstellung bearbeitet, können in Bezug auf die Vertikale mit dem Bezugszeichen 190 ein Winkel α von 43° erzeugt werden.

Bei diesen stumpfen Winkeln ist der Winkelhalter 104 nicht mehr zu sehen, da das Schienensystem so ineinandergeschoben wurde, dass er von dem Äußeren des Schienensystems (siehe Bezugszeichen 102) der Griffbaugruppe 120 überdeckt wird.

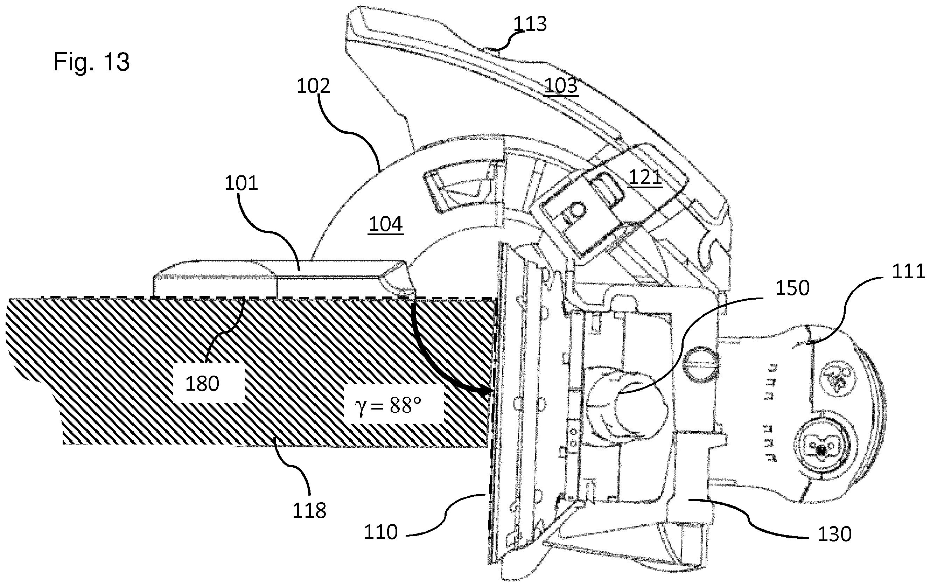

Fig. 13 zeigt ein weiteres Ausführungsbeispiel im steifen Betriebszustand, wo eine andere Winkeleinstellung gewählt wurde und ein zu bearbeitendes Werkstück 118 gezeigt wird. Der Winkelhalter 104 ist in diesem Fall sichtbar, da ein geringerer Winkel eingestellt ist. Der gewünschte Winkel γ beträgt 88° und ist mit dem Pfeil gekennzeichnet. Das Werkstück 118 ist nur teilweise dargestellt und ist vorzugsweise eine Platte, die aus verschiedenen Materialien wie Holz sein kann und gegebenfalls schon einen Auftrag von Lack aufweist. Die Bearbeitungsebene ist mit der Strichpunktlinie gekennzeichnet und zeigt die Wirkebene 110 des Werkzeuges 111, in welcher der Schleifteller auf das Werkstück 118 wirkt. Um bei der Bearbeitung anfallende Abriebe zu sammeln, hat das Werkzeug 111 in der Regel vorteilhafterweise eine Absauganlage. Das dargestellte Werkzeug 111 zeigt beispielsweise einen Anschluss 150 für Abriebsammelbehälter auf, um möglichst staubfrei eine Bearbeitung beim Schleifen zu ermöglichen. Dieses ist insbesondere vorteilhaft bei Feinschliffarbeiten.

Der hier gewählte Winkel γ=88° wird durch die entsprechende Drehung des Drehknopfes 113 festgestellt. Auf diese Weise kann zuverlässig der gewünschte Winkel fest eingestellt werden. Von dem festen Betriebszustand kann einfach durch Umlegen des Exzenterhebels 121 in den flexiblen Betriebszustand umgeschaltet werden. In dem weichen bzw. flexiblen Betriebszustand können Verfahren wie der Lackzwischenschliff vorgenommen werden.

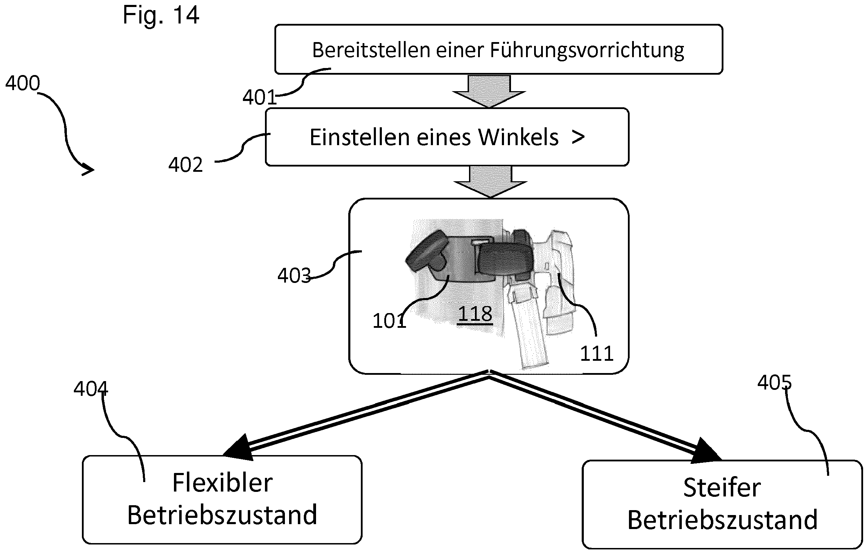

Fig. 14 zeigt ein Verfahren zur Oberflächenbearbeitung von Kantenflächen an Werkstücken 400. Dieses Verfahren umfasst die folgenden Schritte: Der erste Verfahrensschritt 401 ist das Bereitstellen einer Führungsvorrichtung für ein Werkzeug mit wenigstens einem Führungselement und einer Winkelvorrichtung, welche mit einem Werkzeug 111 verbunden ist.

Ein weiterer Verfahrensschritt ist das Einstellen 402 eines vorbestimmten Winkels zwischen der Ebene des wenigstens einen Führungselementes und einer Wirkebene des Werkzeuges mittels der Winkelvorrichtung.

Als weiterer Verfahrensschritt 403 umfasst das Verfahren das Auflegen des wenigstens einen Führungselementes der Führungsvorrichtung auf ein zu bearbeitendes Werkstück mit wenigstens einer Kante. In der dargestellten Skizze des Verfahrensschrittes 403 sind zwei Handgriffe (einer auf dem Führungselement und einer auf der Höhe der Kante) oberhalb des Werkstückes vorgesehen. Mit dem Griff auf dem Führungselement kann ein Abkippen des Werkzeuges 111 mit Absauganlage nach dem Auflegen verhindert werden.

Die Bedienperson kann in dem nächsten Verfahrensschritt zwischen zwei verschiedenen Betriebszuständen wählen. Im Verfahrensschritt 404 kann er den flexiblen Betriebszustand einstellen (404), in dem die Wirkebene des Werkzeuges relativ zur Bearbeitungsebene zur flexiblen Anpassung an die zu bearbeitende Kantenoberfläche bewegbar ist. Alternativ kann die Bedienperson einen steifen Betriebszustand einstellen im Verfahrensschritt 405.

In dem steifen Betriebszustand wird ein vorbestimmter Winkel zwischen der Ebene wenigstens eines Führungselementes und einer Wirkebene des verbundenen Werkzeuges fixiert. Auf diese Weise können genaue Arbeiten durchgeführt werden. Ist das Schleifmittel verbraucht, kann ein weiterer Verfahrensschritt 406 durchgeführt werden, in dem die Führungsplatte so verschoben wird, dass ein einfacher Zugang zu dem Schleifmittel bereitgestellt wird und damit ein Schleifmittelwechsel einfach möglich ist.

Im Gegensatz zu dem steifen Betriebszustand, wo eine starre Verbindung zwischen den genannten Ebenen besteht, ist im flexiblen Betriebszustand eine flexible Anpassung an die Geometrie des Werkzeuges möglich. Diese Arbeitsweise eignet sich insbesondere für den Lackzwischenschliff. Der Lackzwischenschliff ist der Schliff, der nach dem ersten Lackieren durchgeführt wird. Mittels der erfindungsgemäßen Führungsvorrichtung kann vorteilhafterweise ein sehr regelmäßiges Schleifbild und eine präzise geglättete Oberfläche und eine geringe Schleiftoleranz bereitgestellt werden. Im flexiblen Betriebszustand kann vorteilhafterweise ein Dämpfungselement vorgesehen werden, das bei dem maximalen Ausschlag nach unten die Bewegung der Bedienperson dämpft.

Mit der vorliegenden Führungsvorrichtung können relativ kleine Winkelspiele von +/-1,5° eingestellt werden und damit eine unbeabsichtigte Beschädigung der Oberfläche vermieden werden. Es können geglättete Oberflächen von sehr guter Qualität erzielt werden.

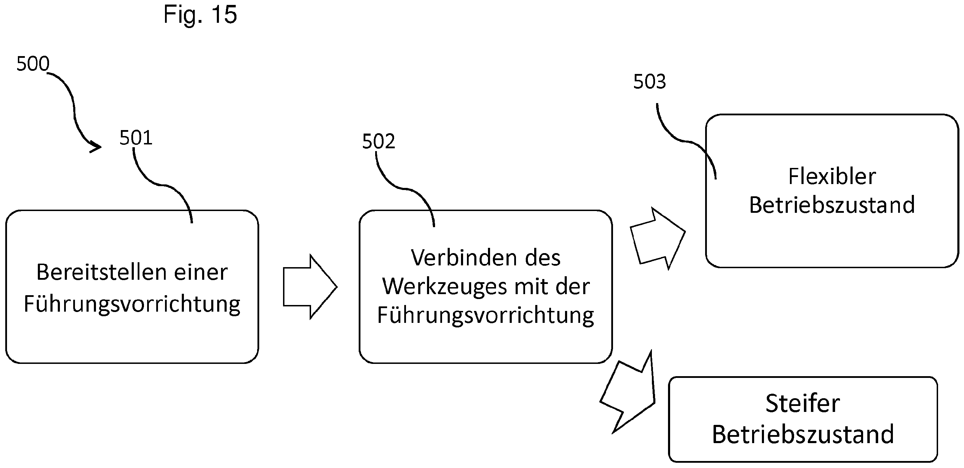

Weiterhin ist die Erfindung und die Führungsvorrichtung dafür ausgelegt, Werkzeuge mit einer Führungsvorrichtung nachzurüsten. Fig. 15 zeigt schematisch die Verfahrensschritte des Nachrüstungsverfahrens 500. Das Nachrüstungsverfahren 500 stellt zunächst im Verfahrensschritt 501 eine Führungsvorrichtung bereit. Der Verfahrensschritt 502 umfasst das Verbinden des Werkzeuges mit der Führungsvorrichtung. Die Führungsvorrichtung umfasst hierzu eine Verbindungsanordnung, die eine geeignete Aufnahme aufweist, um das nachzurüstende Werkzeug vorzugsweise formschlüssig zu verbinden. Ein sicheres Halten kann optional durch Verschraubungen gewährleistet werden. Nach dem Verbinden kann das angeschlossene Werkzeug wahlweise im steifen Betriebszustand (504) oder im flexibleren Betriebszustand (503) geführt werden.

### Bezugszeichenliste

- 100: Führungsvorrichtung
- 101: Führungselement
- 102: Winkelvorrichtung
- 103: Griff bzw. Griffoberteil
- 104: Verschiebbarer Winkelhalter
- 105: Bogenförmige Führungsbahn des Schienensystems
- 106: Drehachse zur Winkeleinstellung
- 107: Stoßschutz
- 108: Drehachse des Werkzeuges im flexiblen Betriebszustand
- 110: Wirkebene/Bearbeitungsebene
- 111: Werkzeug zur Oberflächenbearbeitung
- 112: Schiene der als Schienensystem ausgebildeten Winkelvorrichtung
- 113: Drehknopf
- 114: Betätigungselement oder Drücker
- 115: Führungsplatte
- 116: Lauf- bzw. Gleitsohle
- 117: Schleifteller
- 118: Werkstück
- 119: Griff des Werkzeuges
- 120: Griffbaugruppe
- 121: Spannelement
- 123: Griffunterteil
- 124: Dämpfungselement
- 125: Haltevorrichtung mit Aufnahme für Schwenklager
- 126: Aufnahme für Schwenklager
- 127: Aufnahme für Werkzeug
- 128: Gewindestange
- 129: Aussparung im Griff
- 130: Verbindungsanordnung
- 131: Oberer Haltebügel
- 132: Unterer Haltebügel
- 133: Schwenklager auf Spannelementseite
- 134: Weiteres Schwenklager
- 135: Aufnahme für Schwenklager
- 136: Gegenüberliegende Aufnahme
- 137: Gegenelement bzw. Spannelement für Drehknopf 113
- 138: Langloch
- 139: Verbindungselemente zwischen Haltebügeln 131 und 132
- 141: Halteelement für Dämpfungselement 124 bzw. Anschlag
- 142: Aufnahme für das Spannelement 121
- 143: Verbindungselement bzw. Spannschraube
- 144: Gegenelement für Exzenterhebel
- 145: Verschiebebewegung zum Lösen der Führungsplatte 115
- 146: Mittelachse
- 147: Schleifmittelwechsel
- 148: Federelement
- 149: Spiel zwischen Gegenelement und Exzentergegenfläche
- 150: Anschluss für Abriebsammelbehälter
- 151: Gegenfläche des Exzenterhebels
- 180: Ebene des Führungselementes 101 bzw. Gleitebene der Gleitplatte 115
- 190: Vertikale
- 500: Nachrüstverfahren mit Verfahrensschritten 501-504

- α: Spitzer Winkel in Bezug zur Vertikalen
- β: Stumpfer Winkel
- γ: Winkel zwischen Wirkebene 110 und Gleitebene 180

## Patentansprüche

1. Eine Führungsvorrichtung (100) für ein Werkzeug (111) zur Oberflächenbearbeitung eines Werkstückes (118) umfassend wenigstens ein Führungselement (101);
eine Winkelvorrichtung (102); und
eine Verbindungsanordnung (130) zum Verbinden der Führungsvorrichtung mit dem Werkzeug (111);
wobei mittels der Winkelvorrichtung (102) ein vorbestimmter Winkel zwischen der Ebene (180) des wenigstens einen Führungselementes (101) und einer Wirkebene (110) des verbindbaren Werkzeuges (111) einstellbar ist;
**dadurch gekennzeichnet, dass** die Führungsvorrichtung (100) zwischen wenigstens einem flexiblen Betriebszustand, in dem die Wirkebene des Werkzeuges relativ zur Bearbeitungsebene zur flexiblen Anpassung an die zu bearbeitende Kantenoberfläche bewegbar ist, und einem steifen Betriebszustand, in dem ein vorbestimmter Winkel zwischen der Ebene wenigstens eines Führungselementes (101) und einer Wirkebene (110) des verbundenen Werkzeuges fixiert ist, umstellbar ist.

2. Führungsvorrichtung nach Anspruch 1, ferner aufweisend ein Versteifungselement, das ausgelegt ist, wenigstens den steifen Betriebszustand einzustellen.

3. Führungsvorrichtung nach Anspruch 2, wobei die Verbindungsanordnung eine Ausnehmung (138) für das Versteifungselement aufweist; und
wobei das Versteifungselement einen drehbaren Exzenterkörper (121) aufweist, der mit einem Ende eines durch die Winkelvorrichtung (102) verlaufenden Verbindungselementes (143) koppelbar ist und ausgelegt ist, in die Ausnehmung der Verbindungsanordnung wahlweise mit Spiel oder ohne Spiel einzugreifen, um den flexiblen Betriebszustand oder den steifen Betriebszustand einzustellen.

4. Führungsvorrichtung nach Anspruch 1 oder 2, ferner aufweisend wenigstens ein elastisches Element zur Einstellung des flexiblen Betriebszustandes, wobei das Element ausgewählt ist aus einer Gruppe umfassend:
eine Feder, Dämpfungsplatte, Bolzen mit wenigstens einem elastischen Abschnitt oder eine Kombination der genannten elastischen Elemente.

5. Führungsvorrichtung nach einem der vorhergehenden Ansprüche, wobei die Winkelvorrichtung ein Spannsystem zum Feststellen und Lösen eines Winkels aufweist umfassend ein mechanisches Bedienelement ausgewählt aus der Gruppe umfassend:
eine Schraubverbindung, einen Spannhebel, einen Drehknopf (113) oder einen Einrastmechanismus.

6. Führungsvorrichtung nach einem der vorhergehenden Ansprüche, ferner umfassend wenigstens einen Griff (103), der an der Winkelvorrichtung oder der Verbindungsanordnung oder einem Übergangsbereich zwischen Winkelvorrichtung und Verbindungsanordnung und/oder an dem Führungselement auf der der Führungsebene entgegengesetzten Seite angeordnet ist.

7. Führungsvorrichtung nach Anspruch 6, wobei der Griff (103) wenigstens ein längs verschiebbares Verlängerungselement aufweist, das mit einem Gegenelement der Verbindungsanordnung oder der Winkelvorrichtung in Eingriff bringbar ist.

8. Führungsvorrichtung nach einem der vorhergehenden Ansprüche, wobei die Winkelvorrichtung ein Schienensystem umfasst.

9. Führungsvorrichtung nach Anspruch 8, wobei ein auf wenigstens einer bogenförmigen Schiene um einen bestimmten Winkel verschiebbares Element als Griff mit einem Spannsystem ausgebildet ist.

10. Führungsvorrichtung nach Anspruch 9, wobei die Spannrichtung des Spannsystems orthogonal zur Gleitbahn der Schiene angeordnet ist und in der arretierten Stellung der Winkelvorrichtung (102) eine erste Kontaktfläche im Griff (103) und eine zweite Kontaktfläche im Schienensystem reibschlüssig festlegbar sind.

11. Führungsvorrichtung nach einem der vorhergehenden Ansprüche, wobei das Führungselement wenigstens eine Führungsplatte (115) mit wenigstens einem Rollelement und/oder mit wenigstens einem elastischen Element aufweist.

12. Führungsvorrichtung nach einem der vorhergehenden Ansprüche, wobei das Führungselement (101) an der werkzeugzugewandten Seite um eine Drehachse (106) drehbar gelagert ist.

13. Führungsvorrichtung nach einem der vorhergehenden Ansprüche, wobei das Führungselement (101) oder Führungsplatte (115) wenigstens eine Aufnahme für eine lösbar befestigbare Gleitsohle (116), Gleitstruktur, Gleitgewebe und/oder Gleitgewirk mit einer vorbestimmten Gleiteigenschaft in Abhängigkeit einer Werkstücksoberfläche aufweist.

14. Führungsvorrichtung nach einem der vorhergehenden Ansprüche, wobei eine Drehachse der Winkelvorrichtung an der oberen Kante des zu bearbeitenden Werkstückes angeordnet ist.

15. Führungsvorrichtung nach einem der vorhergehenden Ansprüche, wobei die Führungsvorrichtung im flexiblen Betriebsmodus ein Winkelspiel von +/-10% des mit der Winkelvorrichtung einstellbaren Winkels aufweist.

16. Führungsvorrichtung nach Anspruch 15, wobei die Führungsvorrichtung ferner einen Anschlag (124) aufweist, um eine Endlage des Winkelspiels zu dämpfen.

17. System umfassend eine Führungsvorrichtung für ein Werkzeug nach einem der vorhergehenden Ansprüche und ein Werkzeug zur Oberflächenbearbeitung.

18. System nach Anspruch 17, wobei das Werkzeug ein handgeführtes oder wenigstens teilweise automatisch geführtes Schleifelektrowerkzeug ist.

19. System nach Anspruch 17 oder 18, wobei wenigstens ein Teil des als Führungsplatte ausgebildeten Führungselementes zum Schleifmittelwechsel in eine Position von der Wirkebene weg verschiebbar ist.

20. Verfahren zur Oberflächenbearbeitung von Kantenflächen an Werkstücken umfassend die folgenden Schritte:
Bereitstellen einer Führungsvorrichtung (100) eines Werkzeuges (111) gemäß einem der Ansprüche 1 bis 16 mit wenigstens einem Führungselement (101) und einer Winkelvorrichtung (102), welche mit einem Werkzeug (111) verbunden ist;
Einstellen eines vorbestimmten Winkels zwischen der Ebene des wenigstens einen Führungselementes (101) und einer Wirkebene (110) des Werkzeuges (111) mittels der Winkelvorrichtung (102); Auflegen des wenigstens einen Führungselementes (101) der Führungsvorrichtung auf ein zu bearbeitendes Werkstück mit wenigstens einer Kante; **dadurch, gekennzeichnet, dass** das Verfahren folgende Verfahrensschritte umfasst:
Wahlweise Einstellen eines flexiblen Betriebszustandes, in dem die Wirkebene des Werkzeuges relativ zur Bearbeitungsebene zur flexiblen Anpassung an die zu bearbeitende Kantenoberfläche bewegbar ist; oder
Einstellen eines steifen Betriebszustandes, in dem ein vorbestimmter Winkel zwischen der Ebene wenigstens eines Führungselementes (101) und einer Wirkebene (110) des verbundenen Werkzeuges fixiert ist.

21. Verfahren zur Nachrüstung eines Werkzeuges mit einer Führungsvorrichtung (100) des Werkzeuges (111) gemäß einem der Ansprüche 1 bis 16 mit wenigstens einem Führungselement (101); und
einer Winkelvorrichtung (102) umfassend die folgenden Schritte: Bereitstellen einer Führungsvorrichtung für ein Werkzeug (110) mit wenigstens dem Führungselement (101); und der Winkelvorrichtung; und
Verbinden des Werkzeuges zur Oberflächenbearbeitung mit der Führungsvorrichtung des Werkzeuges mittels einer Verbindungsanordnung.

## Claims

1. A guiding device (100) for a tool (111) for the surface treatment of a workpiece (118) comprising
at least one guide element (101);
one angle device (102); and
one connection arrangement (130) for connecting the guiding device to the tool (111);
wherein a predetermined angle between the plane (180) of the at least one guide element (101) and a plane of action (110) of the connectable tool (111) can be set by means of the angle device (102); and
wherein the guiding device (100) is switchable between at least one flexible operating state, in which the plane of action of the tool, relative to the treatment plane, is movable for flexible adaptation to the edge surface to be treated, and one rigid operating state, in which a predetermined angle between the plane of the at least one guide element (101) and a plane of action (110) of the connected tool is fixed..

2. The guiding device according to Claim 1, furthermore having a bracing element, which is designed to set at least the rigid operating state.

3. The guiding device according to Claim 2, wherein the connection arrangement has a cutout (138) for the bracing element; and
wherein the bracing element has a rotatable eccentric body (121), which can be coupled to one end of a connection element (143) running through the angle device (102) and which is designed to engage in the cutout of the connection arrangement optionally with play or without play, in order to set the flexible operating state or the rigid operating state.

4. The guiding device according to Claim 1 or 2, furthermore having at least one elastic element for setting the flexible operating state, wherein the element is selected from a group comprising:
a spring, damping plate, bolt with at least one elastic section or a combination of said elastic elements.

5. The guiding device according to any one of the preceding claims, wherein the angle device has a clamping system for fixing and releasing an angle, comprising a mechanical operating element selected from the group comprising:
a screw connection, a clamping lever, a rotary knob (113) or a latching mechanism.

6. The guiding device according to any one of the preceding claims, further comprising at least one handle (103), which is arranged on the angle device or the connection arrangement or a transition region between the angle device and the connection arrangement and/or on the guide element on the side away from the guide plane.

7. The guiding device according to Claim 6, wherein the handle (103) has at least one longitudinally displaceable lengthening element, which can be brought into engagement with a mating element of the connection arrangement or of the angle device.

8. The guiding device according to any one of the preceding claims, wherein the angle device comprises a rail system.

9. The guiding device according to Claim 8, wherein an element that can be displaced by a specific angle on at least one arcuate rail is formed as a handle with a clamping system.

10. The guiding device according to Claim 9, wherein the clamping direction of the clamping system is arranged orthogonal to the sliding track of the rail and a first contact surface in the handle (103) and a second contact surface in the rail system can be fixed by friction when the angle device (102) is in the locked position.

11. The guiding device according to any one of the preceding claims, wherein the guide element has at least one guide plate (115) with at least one roller element and/or with at least one elastic element.

12. The guiding device according to any one of the preceding claims, wherein the guide element (101) is mounted on the side facing the tool so as to be rotatable about an axis of rotation (106).

13. The guiding device according to any one of the preceding claims, wherein the guide element (101) or guide plate (115) has at least one receptacle for a detachably attachable sliding base (116), sliding structure, sliding woven fabric and/or sliding knitted fabric with a predetermined sliding property as a function of a workpiece surface.

14. The guiding device according to any one of the preceding claims, wherein an axis of rotation of the angle device is arranged at the upper edge of the workpiece to be treated.

15. The guiding device according to any one of the preceding claims, wherein the guiding device, in the flexible operating mode, has an angular play of +/- 10% of the angle that can be set by the angle device.

16. The guiding device according to Claim 15, wherein the guiding device furthermore has a stop (124), in order to damp an end position of the angular play.

17. A system comprising a guiding device for a tool according to any one of the preceding claims and a tool for surface treatment.

18. The system according to Claim 17, wherein the tool is a hand-held or at least partially automatically guided electric sanding tool.

19. The system according to Claim 17 or 18, wherein at least part of the guide element formed as a guide plate is displaceable into a position away from the plane of action, for changing the sanding material.

20. A method for the surface treatment of edge surfaces on workpieces comprising the following steps:
providing a guiding device of a tool (111) with at least one guide element (101) and one angle device (102), which is connected to a tool (111);
setting a predetermined angle between the plane of the at least one guide element (101) and a plane of action (110) of the tool (111) by means of the angle device (102);
placing the at least one guide element (101) of the guiding device onto a workpiece to be treated, with at least one edge;
optionally setting a flexible operating state, in which the plane of action of the tool, relative to the treatment plane, is movable for flexible adaptation to the edge surface to be treated;
or
setting a rigid operating state, in which a predetermined angle between the plane of at least one guide element (101) and a plane of action (110) of the connected tool is fixed.

21. A method for retrofitting a tool with a guiding device of the tool (111) with at least one guide element (101); and
an angle device (102) comprising the following steps:
providing a guiding device for a tool (110) with at least the guide element (101); and the angle device (102); and
connecting the tool, for surface treatment, to the guiding device of the tool by means of a connection arrangement.

## Revendications

1. Un dispositif de guidage (100) pour un outil (111) de traitement de surface d'une pièce à usiner (118) comprenant au moins un élément de guidage (101) ;
un dispositif angulaire (102) ; et
un dispositif de raccordement (130) pour raccorder le dispositif de guidage à l'outil (111) ;
sachant que le dispositif angulaire (102) permet de régler un angle prédéterminé entre le plan (180) d'au moins un élément de guidage (101) et un plan d'action (110) de l'outil raccordable (111) ;
**caractérisé en ce que** le dispositif de guidage (100) peut passer entre au moins un état de fonctionnement flexible, dans lequel le plan d'action de l'outil est mobile par rapport au plan à usiner, pour une adaptation flexible à la surface du bord à usiner, et un état de fonctionnement rigide, dans lequel un angle prédéterminé est fixé entre le plan d'au moins un élément de guidage (101) et un plan d'action (110) de l'outil raccordé.

2. Dispositif de guidage selon la revendication 1, comprenant par ailleurs un élément de renfort, conçu pour ajuster au moins l'état de fonctionnement rigide.

3. Dispositif de guidage selon la revendication 2, sachant que le dispositif de raccordement présente un évidement (138) pour l'élément de renfort ; et que l'élément de renfort présente un corps excentrique rotatif (121) lequel peut être raccordé à une extrémité d'un élément de liaison (143) s'étendant à travers le dispositif angulaire (102) et qui est conçu pour s'engager dans l'évidement du dispositif de raccordement, au choix avec jeu ou sans jeu, afin d'ajuster l'état de fonctionnement flexible ou l'état de fonctionnement rigide.

4. Dispositif de guidage selon la revendication 1 ou 2, présentant par ailleurs au moins un élément élastique pour ajuster l'état de fonctionnement flexible, sachant que l'élément est sélectionné dans un groupe comprenant :
un ressort, une plaque d'amortissement, un axe avec au moins une section élastique ou une combinaison desdits éléments élastiques.

5. Dispositif de guidage selon l'une des revendications précédentes, sachant que le dispositif angulaire présente un système de serrage pour serrer et desserrer un angle comprenant un élément de commande mécanique sélectionné dans le groupe comprenant :
un raccord à vis, un levier de serrage, un bouton rotatif (113) ou un mécanisme d'enclenchement.

6. Dispositif de guidage selon l'une des revendications précédentes, comprenant par ailleurs au moins une poignée (103), laquelle est disposée sur le dispositif angulaire ou le dispositif de raccordement ou une zone de transition entre le dispositif angulaire et le dispositif de raccordement et/ou sur l'élément de guidage du côté opposé au plan de guidage.

7. Dispositif de guidage selon la revendication 6, sachant que la poignée (103) présente au moins un élément de rallonge pouvant être déplacé longitudinalement, lequel peut être mis en prise avec un élément complémentaire du dispositif de raccordement ou du dispositif angulaire.

8. Dispositif de guidage selon l'une des revendications précédentes, sachant que le dispositif angulaire comprend un système de rails.

9. Dispositif de guidage selon la revendication 8, sachant qu'un élément déplaçable d'un angle déterminé sur au moins un rail en forme d'arc est conçu sous forme de poignée avec un système de serrage.

10. Dispositif de guidage selon la revendication 9, sachant que la direction de serrage du système de serrage est disposée orthogonalement à la glissière du rail et sachant que, dans la position de blocage du dispositif angulaire (102), une première surface de contact dans la poignée (103) et une seconde surface de contact dans le système de rail peuvent être immobilisées par friction.

11. Dispositif de guidage selon l'une des revendications précédentes, sachant que l'élément de guidage présente au moins une plaque de guidage (115) avec au moins un élément de roulement et/ou avec au moins un élément élastique.

12. Dispositif de guidage selon l'une des revendications précédentes, sachant que, du côté tourné vers l'outil, l'élément de guidage (101) est monté de manière à pouvoir tourner autour d'un axe de rotation (106).

13. Dispositif de guidage selon l'une des revendications précédentes, sachant que l'élément de guidage (101) ou la plaque de guidage (115) présente au moins un logement pour une semelle de glissement (116), une structure de glissement, un tissu de glissement et/ou un tissu tricoté de glissement pouvant être fixé(e) de manière amovible et présentant une propriété de glissement prédéterminée en fonction d'une surface de la pièce à usiner.

14. Dispositif de guidage selon l'une des revendications précédentes, sachant qu'un axe de rotation du dispositif angulaire est disposé sur le bord supérieur de la pièce à usiner.

15. Dispositif de guidage selon l'une des revendications précédentes, sachant que, en mode de fonctionnement flexible, le dispositif de guidage présente un jeu angulaire de +/- 10 % de l'angle ajustable avec le dispositif angulaire.

16. Dispositif de guidage selon la revendication 15, sachant que le dispositif de guidage présente par ailleurs une butée (124) pour amortir une position finale du jeu angulaire.

17. Système comprenant un dispositif de guidage pour un outil selon l'une des revendications précédentes et un outil pour le traitement de surface.

18. Système selon la revendication 17, sachant que l'outil est un outil électrique abrasif guidé manuellement ou, au moins partiellement, guidé automatiquement.

19. Système selon la revendication 17 ou 18, sachant qu'au moins une partie de l'élément de guidage conçu sous forme de plaque de guidage est déplaçable dans une position éloignée du plan d'action pour permettre le changement de l'abrasif.

20. Procédé de traitement des surfaces d'arêtes de pièces à usiner comprenant les étapes suivantes :
fourniture d'un dispositif de guidage (100) d'un outil (111) conformément à l'une des revendications 1 à 16 avec au moins un élément de guidage (101) et un dispositif angulaire (102) raccordé à un outil (111) ;
réglage d'un angle prédéterminé entre le niveau d'au moins un élément de guidage (101) et d'un plan d'action (110) de l'outil (111) à l'aide du dispositif angulaire (102) ; pose d'au moins un élément de guidage (101) du dispositif de guidage sur une pièce à usiner avec au moins un bord ; **caractérisé en ce que** le procédé comprend les étapes suivantes :
réglage au choix d'un état de fonctionnement flexible, dans lequel le plan d'action de l'outil est mobile par rapport au plan d'usinage pour une adaptation flexible à la surface d'arête à usiner ; ou
réglage d'un état de fonctionnement rigide, dans lequel l'angle prédéterminé est fixé entre le niveau d'au moins un élément de guidage (101) et d'un plan d'action (110) de l'outil à raccorder.

21. Procédé d'équipement ultérieur d'un outil avec un dispositif de guidage (100) de l'outil (111) conformément à l'une des revendications 1 à 16 avec au moins un élément de guidage (101) ; et
un dispositif angulaire (102) comprenant les étapes suivantes :
fourniture d'un dispositif de guidage pour un outil (110) avec au moins l'élément de guidage (101) ; et le dispositif angulaire ; et
pour le traitement de surface, raccord de l'outil au dispositif de guidage de l'outil à l'aide d'un dispositif de raccordement.
